# EUROPÄISCHE PATENTSCHRIFT

(11) **EP 2 740 042 B1**
(45) Veröffentlichungstag und Bekanntmachung des Hinweises auf die Patenterteilung: **03.02.2016**
(21) Anmeldenummer: 12738103.6
(22) Anmeldetag: 19.07.2012
(51) Int. Cl.: G06F 13/42, H04L 12/413

(54) **VERFAHREN UND VORRICHTUNG ZUR VERBESSERUNG DER DATENÜBERTRAGUNGSSICHERHEIT IN EINER SERIELLEN DATENÜBERTRAGUNG MIT FLEXIBLER NACHRICHTENGRÖßE**
METHOD AND APPARATUS FOR IMPROVING THE DATA TRANSFER SECURITY IN A SERIAL DATA TRANSFER WITH FLEXIBLE MESSAGE SIZE
PROCÉDÉ ET DISPOSITIF DESTINÉS À AMÉLIORER LA SÉCURITÉ DE LA TRANSMISSION DE DONNÉES DANS UNE TRANSMISSION DE DONNÉES EN SÉRIE AVEC UNE TAILLE DE MESSAGE FLEXIBLE

(30) Priorität: 05.08.2011 DE 102011080476
(43) Veröffentlichungstag der Anmeldung: 11.06.2014
(73) Patentinhaber: Robert Bosch GmbH, 70442 Stuttgart (DE)
(72) Erfinder: HARTWICH, Florian, 72762 Reutlingen (DE); SCHEUING, Jan, 71573 Allmersbach (DE)
(86) Internationale Anmeldenummer: PCT/EP2012/064135
(87) Internationale Veröffentlichungsnummer: WO 2013/020781

(56) Entgegenhaltungen:
- UNRUH J ET AL: "ERROR DETECTION ANALYSIS OF AUTOMOTIVE COMMUNICATION PROTOCOLS", SAE SPECIAL PUBLICATIONS, SAE INC, US, 1. Januar 1990 (1990-01-01), Seiten 43-52, XP001007280, ISSN: 0099-5908
- "Road vehicles ? Controller area network (CAN) ? Part 1: Data link layer and physical signalling ; ISO+11898-1-2003", IEEE DRAFT; ISO+11898-1-2003, IEEE-SA, PISCATAWAY, NJ USA, Bd. msc.upamd, 18. November 2010 (2010-11-18), Seiten 1-52, XP017637056, [gefunden am 2010-11-18]

## Beschreibung

### Stand der Technik

Die Erfindung betrifft ein Verfahren sowie eine Vorrichtung zur seriellen Datenübertragung zwischen wenigstens zwei Teilnehmern in einem seriellen Bussystem.

Beispielsweise aus den Normen der Familie ISO 11898-1 bis -5 ist das Controller Area Network (CAN) sowie eine als "Time Triggered CAN" (TTCAN) bezeichnete Erweiterung des CAN bekannt, im Folgenden auch als Norm CAN bezeichnet. Das beim CAN verwendete Medienzugriffssteuerverfahren beruht auf einer bitweisen Arbitrierung. Bei der bitweisen Arbitrierung können mehrere Teilnehmerstationen gleichzeitig Daten über den Kanal des Bussystems übertragen, ohne dass hierdurch die Datenübertragung gestört wird. Die Teilnehmerstationen können weiterhin beim Senden eines Bits über den Kanal den logischen Zustand (0 oder 1) des Kanals ermitteln. Entspricht ein Wert des gesendeten Bits nicht dem ermittelten logischen Zustand des Kanals, dann beendet die Teilnehmerstation den Zugriff auf den Kanal. Bei CAN wird die bitweise Arbitrierung üblicherweise anhand eines Identifiers innerhalb einer über den Kanal zu übertragenden Nachricht vorgenommen. Nachdem eine Teilnehmerstation den Identifier vollständig an den Kanal gesendet hat, weiß sie, dass sie exklusiven Zugriff auf den Kanal hat. Somit entspricht das Ende der Übertragung des Identifiers einem Beginn eines Freigabeintervalls, innerhalb dessen die Teilnehmerstation den Kanal exklusiv nutzen kann. Gemäß der Protokollspezifikation des CAN dürfen andere Teilnehmerstationen so lange nicht auf den Kanal zugreifen, das heißt Daten an den Kanal senden, bis die sendende Teilnehmerstation ein Prüfsummenfeld (CRC-Feld, CRC Field, "CRC Checksumme") der Nachricht übertragen hat. Somit entspricht ein Endzeitpunkt der Übertragung des CRC Fields einem Ende des Freigabeintervalls. Eine weitere Eigenschaft der Protokoll-Spezifikation ist es, dass nach jeweils fünf Bits mit gleichem Wert durch den Sender ein zusätzliches, so genanntes "Stuff-Bit" mit entgegengesetztem Wert in den Datenstrom eingefügt wird, um das Auftreten von Signalflanken sicherzustellen, welche für die Synchronisation der Busteilnehmer, insbesondere Abtastzeitpunkte benötigt werden. Die eingefügten "Stuff-Bits" werden auf Empfängerseite wieder verworfen. Sie unterliegen nicht der oben genannten CRC Prüfung.

Durch das Protokoll wird also eine zerstörungsfreie, sichere Übertragung derjenigen Nachricht über den Kanal erreicht, die das Arbitrierungsverfahren gewonnen hat. Die Protokolle des CAN eignen sich besonders zum Übertragen kurzer Meldungen unter Echtzeitbedingungen, wobei durch geeignete Zuweisung der Identifier sichergestellt werden kann, dass besonders wichtige Nachrichten nahezu immer die Arbitrierung gewinnen und erfolgreich gesendet werden.

Durch die Übertragung eines aus den zuvor in der Nachricht übertragenen Daten mittels eines Generator-Polynoms gebildeten CRC-Feldes und Durchführung einer CRC-Prüfung auf Empfängerseite ist eine hohe Übertragungssicherheit beziehungsweise Fehlererkennungszuverlässigkeit gegeben. Das Einfügen von so genannten Stuff-Bits an Stellen innerhalb der Nachricht, an denen fünf aufeinander folgende, gleiche Bits übertragen werden, in Verbindung mit der Resynchonisation des Bit-Timings anhand von Flanken zwischen Bits mit unterschiedlichem Wert stellt eine große Toleranz gegenüber Toleranzen der verwendeten Oszillatoren sicher.

Mit der zunehmenden Vernetzung moderner Fahrzeuge und dem Einzug zusätzlicher Systeme zur Verbesserung beispielsweise der Fahrsicherheit oder des Fahrkomforts wachsen die Anforderungen an die zu übertragenden Datenmengen, die Übertragungsrate, die Übertragungssicherheit und die bei der Übertragung zulässigen Latenzzeiten. Beispiele sind Fahrdynamikregelsysteme wie z.B. das elektronische Stabilitätsprogramm ESP, Fahrerassistenzsysteme wie z.B. die automatische Abstandsregelung ACC, oder Fahrerinformationssysteme wie z.B. die Verkehrszeichenerkennung (vgl. beispielsweise Beschreibungen in "Bosch Kraftfahrtechnisches Handbuch", 27. Auflage, 2011, Vieweg+Teubner).

G. Cena und A. Valenzano behandeln in "Overclocking of controller area networks" (Electronics Letters, Vol. 35, No. 22 (1999), S. 1924) die Auswirkungen einer Übertaktung der Busfrequenz in Teilbereichen der Nachrichten auf die effektiv erzielte Datenrate.

Das am 02.05.2011 auf der Internet-Seite http://www.semiconductors.bosch.de/ veröffentlichte Dokument "CAN with Flexible Data-Rate, White Paper, Version 1.0" stellt ein modifizierte Datenübertragungsprotokoll vor, welches unter anderem eine Vergrößerung des Datenfeldes, sowie für einen Teil der CAN-Nachricht eine Verkürzung der Bitlänge ermöglicht. Stuff-Bits, die vor Beginn des CRC-Feldes auftreten, werden bei CAN FD in die CRC-Prüfung miteinbezogen, was bereits zu einer höheren Datensicherheit führt. Jedoch werden innerhalb des CRC Feldes auftretende Stuff-Bits weiterhin von der CRC Prüfung ausgenommen. Dies stellt eine Begrenzung für die Sicherheit der Fehlererkennungsmechanismen des Protokolls dar. Es zeigt sich, dass der Stand der Technik nicht in jeder Hinsicht befriedigende Ergebnisse liefert.

XP001007280 offenbart ein Verfahren gemäß dem Oberbegriff des Anspruchs 1. Offenbarung der Erfindung

Im Folgenden wird die Erfindung mit ihren Vorteilen anhand von Zeichnungen und Ausführungsbeispielen beschrieben. Der Gegenstand der Erfindung ist nicht auf die dargestellten und geschilderten Ausführungsbeispiele beschränkt.

### Vorteile der Erfindung

Die vorliegende Erfindung geht aus von einem Verfahren zur seriellen Datenübertragung in einem Bussystem mit mindestens zwei Busteilnehmern, die über den Bus Nachrichten austauschen, wobei der Sendezugriff auf den Bus für jede Nachricht an einen Busteilnehmer durch das Arbitrierungsverfahren gemäß der CAN-Norm ISO 11898-1 vergeben wird, wobei die Nachrichten einen logischen Aufbau gemäß der CAN-Norm aufweisen, also aus Start-of-Frame-Bit, Arbitration Field, Control Field, Data Field, CRC Field, Acknowledge Field und End-of-Frame-Field aufgebaut sind, wobei zu Beginn einer Nachricht zusätzlich zur Berechung des CRC Field gemäß der CAN-Norm die Berechnung wenigstens eines weiteren CRC Feldes mittels eines von der CAN-Norm abweichenden Generator-Polynoms parallel gestartet wird, wobei bei wenigstens einer der zusätzlich ausgeführten CRC-Berechnungen auch Stuff-Bits, welche nach den Regeln der CAN-Norm in Teile der Nachricht, die vor dem CRC Field liegen, eingefügt wurden, berücksichtigt werden, und wobei abhängig von einer geeigneten Kennzeichnung (EDL) entschieden wird, welches Ergebnis aus einer der parallel gestarteten CRC-Berechnungen zur Prüfung der korrekten Datenübertragung verwendet wird.

Das Verfahren zeichnet sich dadurch aus, dass bei entsprechender Kennzeichnung eine zusätzliche Bedingung überprüft wird, bei deren Vorliegen Fixed-Stuff-Bit-Sequenzen aus einem oder mehreren Bits zumindest in Teile der Nachricht eingefügt werden. Dadurch kann die vorteilhafte Wirkung erzielt werden, dass gezielt Signalflanken in der Nachricht generiert werden können, welche beispielswiese zur Prüfung und Korrektur der Synchronisierung der Busteilnehmer aufeinander nützlich sein können, insbesondere wenn, wie in einer besonders vorteilhaften Ausführungsform vorgesehen, das erste eingefügte Bit der Fixed-Stuff-Bit-Sequenz einen zu dem vorhergehenden Bit inversen Wert aufweist.

In einer besonders vorteilhaften Ausführungsform ist die zusätzliche Bedingung derartig vorgegeben, dass sie in regelmäßigen Abständen eintritt, so dass an vorgegebenen Positionen der Nachricht Fixed-Stuff-Bit-Sequenzen aus einem oder mehreren Bits in die Nachricht eingefügt werden. Dadurch kann in besonders einfacher Weise das Einfügen der Bits vor dem Senden und das Entfernen der eingefügten Bits in den empfangenden Busteilnehmern durchgeführt werden. Da das Einfügen der Fixed-Stuff-Bit-Sequenzen nicht daten- sondern beispielsweise zählerabhängig erfolgt, wird die vorteilhafte Wirkung erzielt, dass sich zwei durch irgendeine Störung in diesen Teilen des übertragenen Bitstroms entstandene Fehler nicht zu einer Vielzahl von Fehlern vermehren können, indem durch die Bit-Fehler an einer Stelle der Nachricht ein Stuff-Bit in ein scheinbares Daten-Bit und an einer anderen Stelle ein Daten-Bit in ein scheinbares Stuff-Bit verwandelt wird.

Weiterhin ist es vorteilhaft, wenn zwischen zwei eingefügten Fixed-Stuff-Bit-Sequenzen jeweils höchstens vier Daten-Bits angeordnet sind, denn so kann das Verletzen der normgemäßen Stuffing-Regel, nämlich das Auftreten von sechs aufeinander folgenden Bits gleicher Polarität, vermieden werden und die Position der Fixed-Stuff-Bits ist somit einheitlich definiert und nicht datenabhängig. Der Begriff "Daten-Bit" dient hier zur Abgrenzung von den Stuff-Bits und bezeichnet diejenigen Bits, welche als Bestandteil des Nachrichtenformates, also im Start-of-Frame-Bit, Arbitration Field, Control Field, Data Field, CRC Field, Acknowledge Field und End-of-Frame-Field, vom Sender an den oder die Empfänger übertragen werden müssen.

Es ist vorteilhaft, wenn zumindest im CRC Field einer gekennzeichneten Nachricht bei Vorliegen der zusätzlichen Bedingung Fixed-Stuff-Bit-Sequenzen in die Nachricht eingefügt werden, es kann aber auch die gesamte Nachricht durch Fixed-Stuff-Bit-Sequenzen ergänzt werden. In einer besonders vorteilhaften Ausführungsform wird nur das CRC Field durch Fixed-Stuff-Bit-Sequenzen ergänzt. In einer ebenfalls vorteilhaften Ausführungsform weist das CRC Field der gekennzeichneten Nachrichten eine von der CAN-Norm abweichende, insbesondere größere Anzahl von Bits auf. Das übertragene CRC Field beginnt außerdem mit einer solchen Fixed-Stuff-Bit-Sequenz, so dass eine am Ende des Datenfeldes auftretende Stuff-Bedingung sicher abgefangen wird und die Positionen der Fixed-Stuff-Bit-Sequenzen einheitlich festgelegt sind. Auf diese Weise ist eine optimierte Sicherheit der Datenübertragung durch eine sehr zuverlässige Erkennung von Übertragungsfehlern gewährleistet.

Es ist außerdem vorteilhaft, wenn die erste Kennzeichnung für Nachrichten mit Standard Adressierung durch ein rezessives zweites Bit im Control Field und für Nachrichten mit Extended Adressierung durch ein rezessives erstes und / oder zweites Bit im Control Field erfolgt. Dadurch sind die modifizierten Nachrichten für die Busteilnehmer eindeutig von normgemäßen Nachrichten unterscheidbar. In einer bevorzugten Ausführungsform umfasst bei Vorliegen der ersten Kennzeichnung das Control Field der Nachrichten abweichend von der CAN-Norm mehr als sechs Bit, wobei insbesondere auf das rezessive Bit der ersten Kennzeichnung in allen Daten-Nachrichten wenigstens ein dominantes Bit folgt. Bei Vorliegen der ersten Kennzeichnung kann in vorteilhafter Weise die Flanke zwischen dem rezessiven Bit der ersten Kennzeichnung und dem wenigstens einen folgenden dominanten Bit zur Re-Synchronisierung oder Hard-Synchronisierung des Bit-Timings der Busteilnehmer genutzt werden, was die Zuverlässigkeit und Fehlersicherheit der Datenübertragung insbesondere bei nachfolgender Umschaltung der Bitlänge erhöht.

Ebenfalls vorteilhaft ist es, wenn bei Vorliegen der ersten Kennzeichnung das Datenfeld der Nachrichten abweichend von der CAN-Norm mehr als acht Bytes umfassen kann, da auf diese Weise die Menge an übertragenen Daten je Nachricht, und damit auch die effektive Übertragungsrate erhöht werden kann. Zur Feststellung der Größe des Datenfeldes werden dann die Werte der vier Bits des Data Length Codes zumindest teilweise abweichend von der CAN-Norm interpretiert.

Die erste Kennzeichnung wird vorteilhafterweise in den Busteilnehmern ausgewertet und abhängig von der Kennzeichnung und dem Data Length Code der Empfangsprozess an die Größe des Datenfeldes angepasst. So ist eine optimale Flexibilität der Datenübertragung gewährleistet.

Darüber hinaus nimmt bei Vorliegen einer zweiten Kennzeichnung die Bitlänge für wenigstens einen vorgegebenen oder vorgebbaren Bereich innerhalb der Nachricht einen gegenüber der vor dem Vorliegen der zweiten Kennzeichnung verwendeten Bitlänge verkürzten Wert an, wobei der Bereich frühestens mit der zweiten Kennzeichnung beginnt und spätestens mit dem CRC Delimiter endet, so dass in vorteilhafter Weise die Nachricht in kürzerer Zeit über den Bus übertragen werden kann. Die zweite Kennzeichnung hat den Vorteil, dass durch die zweistufige Umschaltung - einerseits der Größe des Datenfeldes und andererseits der Bitlänge in Teilen der Nachricht - mit jeweils separater Kennzeichnung die Vorteile der beiden Maßnahmen je nach Möglichkeit auch separat ausgenutzt werden können. Beispielsweise können auch dann, wenn aus Gründen der Bustopologie die Umschaltung auf kürzere Bitlänge nicht möglich ist, weiterhin Nachrichten mit einer höheren Datenmenge versendet werden. Auch kann bei Auftreten von Fehlern in Nachrichten mit verkürzter Bitlänge zunächst auf die normale Bitlänge ungeschaltet werden, ohne die Vorteile der Vergrößerung des Datenbereiches zu opfern.

Es ist weiterhin vorteilhaft für die Kennzeichnungs- und Synchronisierungszwecke, wenn die zweite Kennzeichnung ebenfalls durch ein rezessives Bit im Control Field erfolgt, welches zeitlich nach dem Bit der ersten Kennzeichnung übertragen wird, insbesondere wenn dieses vom rezessiven Bit der ersten Kennzeichnung durch wenigstens ein dominantes Bit getrennt ist.

In einer vorteilhaften Ausführungsform wird die zweite Kennzeichnung in den Busteilnehmern bei Vorliegen der ersten Kennzeichnung ausgewertet und abhängig vom Wert der zweiten Kennzeichnung der Empfangsprozess an die unterschiedlichen Werte der Bitlänge innerhalb einer Nachricht angepasst. Eine zuverlässige Erkennung der beschleunigt übertragenen Nachrichten ist so gewährleistet.

In vorteilhafter, weil den Implementierungsaufwand minimierender Weise werden die mindestens zwei unterschiedlichen Werte der zeitlichen Bitlänge innerhalb einer Nachricht durch Verwendung mindestens zweier unterschiedlicher Skalierungsfaktoren zur Einstellung der Bus-Zeiteinheit relativ zu einer kleinsten Zeiteinheit oder dem Oszillatortakt im laufenden Betrieb realisiert.

Das Verfahren ist vorteilhaft einsetzbar im normalen Betrieb eines Kraftfahrzeuges zur Übertragung von Daten zwischen wenigstens zwei Steuergeräten des Kraftfahrzeuges, welche über einen geeigneten Datenbus verbunden sind. Es ist aber gleichermaßen vorteilhaft einsetzbar während der Fertigung oder Wartung eines Kraftfahrzeuges zur Übertragung von Daten zwischen einer zum Zwecke der Programmierung mit einem geeigneten Datenbus verbundenen Programmierungseinheit und wenigstens einem Steuergerät des Kraftfahrzeuges, welches mit dem Datenbus verbunden ist. Eine weitere vorteilhafte Einsatzmöglichkeit besteht beim Betrieb von industriellen Steueranlagen, insbesondere bei langen Verbindungsleitungen. In allen Fällen ist die Flexibilität in der Übertragungsrate bei gleichzeitiger, sehr hoher Übertragungssicherheit vorteilhaft, um das Übertragungsverfahren an die jeweiligen Gegebenheiten wie z.B. die Signallaufzeiten anzupassen.

Ein weiterer Vorteil ist, dass ein Norm-CAN Controller nur minimal geändert werden muss, um erfindungsgemäß arbeiten zu können. Ein erfindungsgemäßer Kommunikationscontroller, der auch als Norm-CAN Controller arbeiten kann, ist nur unwesentlich größer als ein herkömmlicher Norm-CAN Controller. Das zugehörige Anwendungs-Programm muss nicht geändert werden, und schon dann werden Vorteile in der Geschwindigkeit der Datenübertragung erzielt.

Es können in vorteilhafter Weise erhebliche Teile des CAN-Conformance-Tests (ISO 16845) übernommen werden. In einer vorteilhaften Ausprägung kann das erfindungsgemäße Übertragungsverfahren mit den Ergänzungen des TTCAN (ISO 11898-4) kombiniert werden.

### Zeichnungen

Die Erfindung wird im Weiteren anhand der Zeichnungen näher erläutert.
Figur 1a zeigt die zwei Alternativen für den Aufbau von Daten-Nachrichten gemäß der CAN-Norm ISO 11898-1, das CAN Standard Format und das CAN Extended Format.
Figur 1b zeigt zwei Beispiele für das Format von demgegenüber bei dem erfindungsgemäßen Datenübertragungsverfahren modifizierten "CAN FD Long" Nachrichten mit geändertem Control Field und flexibler Größe von Datenfeld und CRC Field. Dargestellt sind sowohl eine Modifikation einer Standard CAN Nachricht, als auch eine Modifikation einer Extended CAN Nachricht.
Figuren 1c, 1d, 1e zeigen einige Ausführungsbeispiele für die erfindungsgemäße Modifikation des übertragenen CRC Fields durch Einfügen von zusätzlichen Fixed-Stuff-Bits oder Fixed-Stuff-Bit-Sequenzen.
Figur 2 stellt verschiedene Möglichkeiten dar, wie der Inhalt des Data Length Code bei der erfindungsgemäßen Datenübertragung abweichend von der CAN-Norm ISO 11898-1 interpretiert werden kann.
Figur 3 stellt schematisch ein Ausführungsbeispiel für den Empfangsprozess auf einer erfindungsgemäßen Teilnehmerstation vom Typ "CAN FD Long" des Bussystems dar.
Figur 4 zeigt zwei weitere Beispiele für in dem erfindungsgemäßen Datenübertragungsverfahren modifizierten Nachrichten vom Typ "CAN FD Fast", bei welchen gegenüber Figur 1b zusätzlich Bereiche innerhalb der Nachricht festgelegt sind, in welchen erfindungsgemäß eine unterschiedliche Bitlänge verwendet wird.
Figur 5 stellt schematisch ein Ausführungsbeispiel für den Empfangsprozess auf einer erfindungsgemäßen Teilnehmerstation vom Typ "CAN FD Fast" des Bussystems dar.
Figur 6a zeigt schematisch einen Ausschnitt des Steuerwerkes, welches in erfindungsgemäßen Vorrichtungen das Einfügen von zusätzlichen Fixed-Stuff-Bits oder Fixed-Stuff-Bit-Sequenzen in gesendete Nachrichten durchführt.
Figur 6b zeigt schematisch einen Ausschnitt des Steuerwerkes, welches in erfindungsgemäßen Vorrichtungen das Entfernen der zusätzlichen Fixed-Stuff-Bits oder Fixed-Stuff-Bit-Sequenzen aus empfangenen Nachrichten durchführt.

### Beschreibung der Ausführungsbeispiele

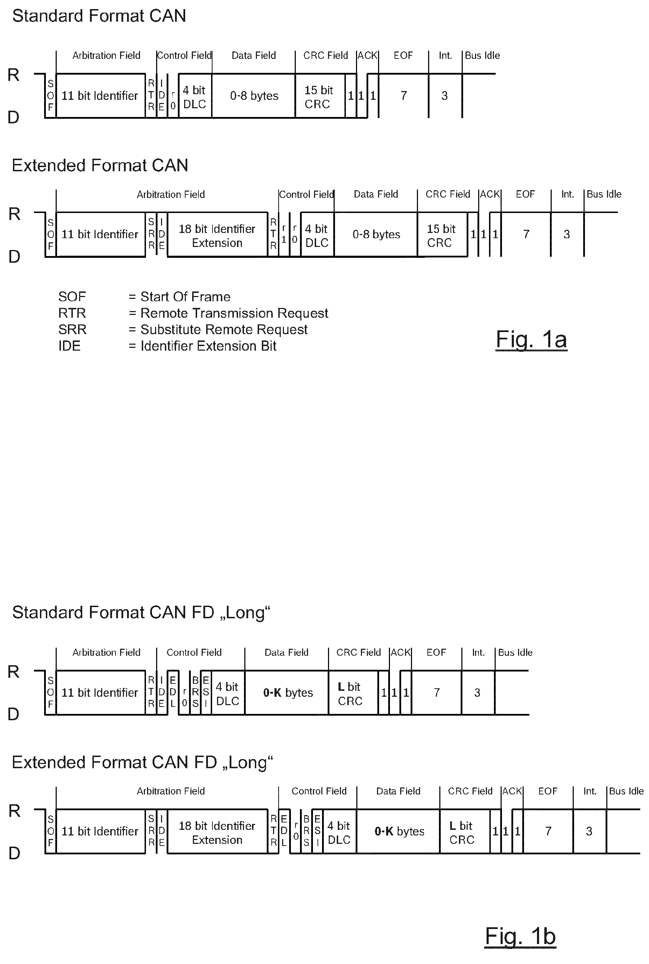

In Figur 1a ist der Aufbau von Nachrichten, wie sie auf einem CAN Bus zur Datenübertragung verwendet werden, dargestellt. Die beiden unterschiedlichen Formate "Standard" und "Extended" sind dargestellt. Das erfindungsgemäße Verfahren ist in geeigneten Ausführungsformen auf beide Formate anwendbar.

Die Nachricht beginnt mit einem "Start of Frame"(SOF)-Bit, das den Beginn der Nachricht signalisiert. Es schließt sich ein Abschnitt an, der in erster Linie zur Identifizierung der Nachricht dient, und anhand dessen die Teilnehmer des Bussystems entscheiden, ob sie die Nachricht empfangen oder nicht. Dieser Abschnitt wird mit "Arbitration Field" bezeichnet und enthält den Identifier. Es folgt ein "Control Field", das unter anderem den Data Length Code enthält. Der Data Length Code enthält Informationen über die Größe des Datenfeldes der Nachricht. Hieran schließt sich das eigentliche Datenfeld "Data Field" an, das die zwischen den Teilnehmern des Bussystems auszutauschenden Daten enthält. Es folgt das "CRC Field" mit der 15 Bit umfassenden Checksumme und einem Delimiter, und anschließend zwei "Acknowledge"(ACK)-Bits, die dazu dienen, den erfolgreichen Empfang einer Nachricht an den Sender zu signalisieren. Abgeschlossen wird die Nachricht durch eine "End of Frame"(EOF)-Sequenz.

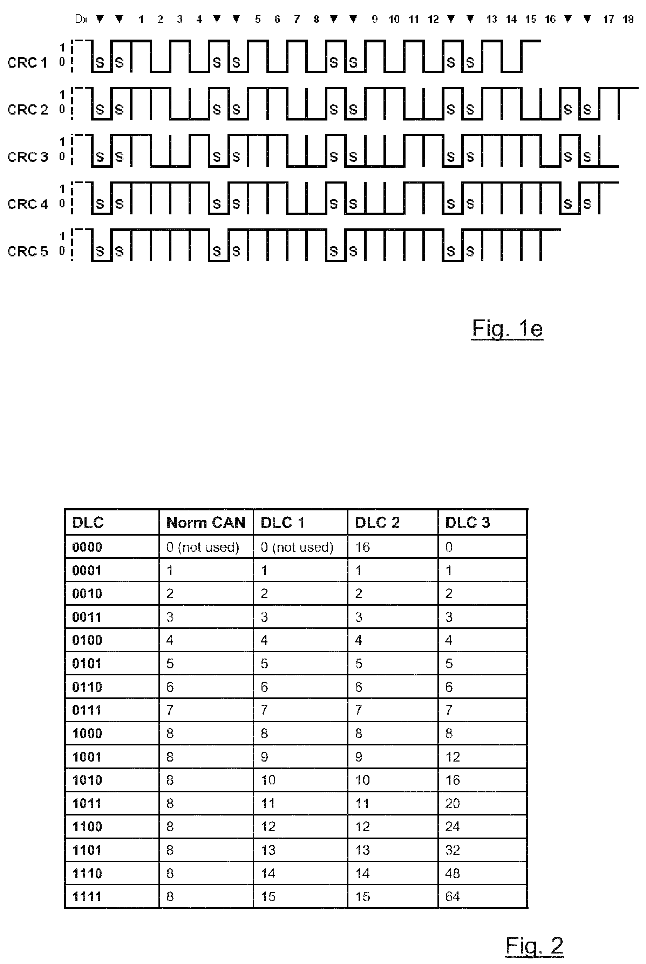

Bei dem CAN Übertragungsverfahren nach der Norm darf das Datenfeld maximal 8 Byte, also 64 Bit an Daten enthalten. Der Data Length Code umfasst gemäß der Norm vier Bits, kann also 16 verschiedene Werte annehmen. Benutzt werden aus diesem Wertebereich in heutigen Bussystemen lediglich acht verschiedene Werte für die unterschiedlichen Größen des Datenfeldes von 1 Byte bis zu 8 Byte. Ein Datenfeld von 0 Byte ist im Norm CAN nicht empfohlen, Größen oberhalb von 8 Byte sind nicht zulässig. Die Zuordnung der Werte des Data Length Code zu den Größen des Datenfeldes ist in Figur 2 in der Spalte CAN Norm dargestellt.

In Figur 1b sind in analoger Darstellung die erfindungsgemäß zu übertragenden, modifizierten Nachrichten, jeweils abgeleitet von den beiden Norm-Formaten, gegenübergestellt. Sie unterscheiden sich von den normgemäßen Nachrichten aus Figur 1a durch die Ergänzung einiger zusätzlicher Bits im Control Field, die mit EDL, BRS, ESI bezeichnet sind und deren Zweck im Folgenden noch erläutert wird. Weiterhin unterscheiden sich die erfindungsgemäßen Nachrichten durch die variable Größe von Data Field und CRC Field. Die Nachrichten tragen daher die Bezeichnung "CAN FD Long".

Bei dem erfindungsgemäß modifizierten Übertragungsverfahren darf das Datenfeld auch mehr als 8 Byte enthalten, nämlich in der dargestellten Ausprägung bis zu K Byte. Anders als im Norm CAN werden weitere Werte, die der Data Length Code einnehmen kann, ausgenutzt, um größere Datenfelder zu kennzeichnen. Beispielsweise können die vier Bits des Data Length Code benutzt werden, um die Werte von null bis 15 Byte darzustellen. Es können aber auch andere Zuordnungen getroffen werden, beispielsweise ist es eine Möglichkeit, den in heutigen CAN-Nachrichten üblicherweise nicht genutzten Wert des Data Length Code DLC = 0b0000 für eine weitere mögliche Größe des Datenfeldes zu benutzen, beispielsweise für die Größe 16 Byte.

Diese beiden Möglichkeiten sind in Figur 2 in Tabellenform als DLC 1 und DLC 2 dargestellt. Die Maximalgröße des Datenfeldes K hat in diesen Fällen den Wert 15 bzw. 16. Eine weitere Möglichkeit ist es, dass für die Werte des Data Length Code größer 0b1000 und bis 0b1111 die zugehörigen Größen des Datenfeldes um ein größeres Inkrement anwachsen. Ein Beispiel für diesen Fall ist in der Tabelle als DLC 3 dargestellt. Die Maximalgröße des Datenfeldes K erreicht in dieser Variante den Wert 64 Byte. Eine andere Wahl ist selbstverständlich möglich, beispielsweise ein Inkrement von jeweils 4 Byte.

Um zu gewährleisten, dass ein erfindungsgemäßer Kommunikationscontroller feststellen kann, in welcher Art er die Inhalte des Data Length Code zu interpretieren hat, ist es vorteilhaft, dass er selbständig erkennt, ob die Kommunikation des Bussystems nach Norm CAN oder dem erfindungsgemäßen Verfahren abläuft. Eine Möglichkeit hierzu besteht darin, ein Bit innerhalb des Arbitration Field oder des Control Field, welches im Norm-CAN immer mit einem festen Wert übertragen wird, zur Kennzeichnung heranzuziehen, so dass aus dieser ersten Kennzeichnung der Kommunikationscontroller eine erste Umschaltbedingung ableiten kann, abhängig von der er das anzuwendende Übertragungsverfahren auswählt.

### Kennzeichnung bei Standard Adressierung:

Das zweite Bit des Control Field von Norm-CAN Daten-Nachrichten wird im Standard Format, wie in Figur 1a im oberen Teil dargestellt, stets dominant gesendet und mit r0 bezeichnet. In dem in Figur 1b im oberen Teil dargestellten Beispiel einer erfindungsgemäßen Nachricht mit Standard Adressierung (d.h. mit einem Arbitration Field gemäß Standard CAN Format) wird dieses zweite Bit des Control Field zur Kennzeichnung verwendet, indem es rezessiv gesendet wird. Ein rezessiver Wert des zweiten Bits des Control Fields in einer solchen Nachricht zeigt also an, dass im Folgenden das von der Norm abweichende Nachrichtenformat übertragen wird. Dieses rezessiv übertragene zweite Bit des Control Field einer Nachricht mit Standard Arbitration Field wird mit EDL (Extended Data Length) bezeichnet. Das im Norm-CAN stets dominant übertragene Bit r0 wird in den erfindungsgemäßen Nachrichten durch das rezessive EDL-Bit ersetzt, oder es rückt in den erfindungsgemäßen Nachrichten eine Position nach hinten auf den Platz zwischen dem rezessiven Bit EDL und dem bei Umschaltung der Bitlänge ebenfalls rezessiven Bit BRS. Weiterhin können im Control Field noch weitere Bits eingefügt werden. Dargestellt ist in Figur 1b zum Beispiel ein ESI genanntes Bit, auf das später noch eingegangen wird. Es könnten an dieser Stelle auch zwei oder mehr Bits eingefügt werden, ohne das erfindungsgemäße Verfahren zu beeinflussen.
Insgesamt wird also die Bitfolge im Control Field von Standard Norm-CAN Nachrichten
{IDE, r0, DLC3, DLC2, DLC1, DLC0}
in erfindungsgemäßen Nachrichten ersetzt durch
{IDE, EDL, N weitere Bits, DLC3, DLC2, DLC1, DLC0}.
In dem in Figur 1b dargestellten Beispiel gilt N=3 mit den eingefügten Bits r0, BRS, ESI. N könnte aber auch beliebige andere Werte größer Null annehmen. Das Bit BRS sollte gegebenenfalls - aus Gründen, die später erläutert werden - nach einem stets dominant übertragenen Bit, beispielsweise in Kombination mit und direkt nach dem Bit r0, eingefügt werden.

### Kennzeichnung bei Extended Adressierung:

Die ersten beiden Bits des Control Field von Norm-CAN Daten-Nachrichten werden im Extended Format, wie in Figur 1a im unteren Teil dargestellt, stets dominant gesendet und mit r1 und r0 bezeichnet. In dem in Figur 1b im unteren Teil dargestellten Beispiel einer erfindungsgemäßen Nachricht mit Extended Adressierung (d.h. mit einem Arbitration Field gemäß Extended CAN Format) wird das erste Bit r1 des Control Field zur Kennzeichnung verwendet, indem es rezessiv gesendet wird. Ein rezessiver Wert des ersten Bits des Control Fields in einer solchen Nachricht zeigt in diesem Fall an, dass im Folgenden das von der Norm abweichende Nachrichtenformat übertragen wird. Auch hier wird dieses rezessiv übertragene Bit des Control Field mit EDL (Extended Data Length) bezeichnet. Es ersetzt das reservierte, dominante Bit r1 der Norm-CAN Nachrichten mit Extended Format. Alternativ könnte das dominante Bit r1 auch erhalten bleiben und einen Platz nach hinten rücken, so dass das EDL-Bit als zusätzliches Bit zwischen RTR und r1 eingefügt wäre. Ebenfalls möglich wäre es, das EDL-Bit (rezessiv) als zusätzliches Bit zwischen r1 (dominant) und r0 (dominant) einzufügen. Anschließend können auch in diesem Fall im Control Field noch weitere Bits eingefügt werden. Dargestellt ist in Figur 1b zum Beispiel wieder das ESI genannte Bit, auf das noch eingegangen wird. Es könnten auch zwei oder mehr Bits eingefügt werden, ohne das erfindungsgemäße Verfahren zu beeinflussen. Insgesamt wird also die Bitfolge im Control Field von Extended Norm-CAN Nachrichten
{r1, r0, DLC3, DLC2, DLC1, DLC0}
in erfindungsgemäßen Nachrichten ersetzt durch
{EDL, N weitere Bits, DLC3, DLC2, DLC1, DLC0} oder
{r1, EDL, M weitere Bits, DLC3, DLC2, DLC1, DLC0}.
Das in Figur 1b dargestellte Beispiel zeigt die erstgenannte Variante mit N=3, nämlich mit den eingefügten Bits r0, BRS, ESI. N beziehungsweise M könnten aber auch auch beliebige andere Werte größer Null annehmen. Das Bit BRS sollte auch hier gegebenenfalls - aus Gründen, die später erläutert werden - nach einem stets dominant übertragenen Bit, beispielsweise in Kombination mit und direkt nach dem Bit r0, eingefügt werden.

Es ist alternativ auch möglich, das Verfahren in geeigneten Kommunikationscontrollern zur Anwendung zu bringen, die nicht auch zur normgemäßen CAN Kommunikation ausgelegt sind. In diesem Fall kann auch die Festlegung der genannten ersten Umschaltbedingung, beispielsweise abhängig von einer geeigneten Kennzeichnung der Nachrichten, entfallen. Die Kommunikationscontroller arbeiten in diesem Fall vielmehr ausschließlich gemäß einem der beschriebenen Verfahren und sind dementsprechend nur in Bussystemen einsetzbar, in welchen ausschließlich solche erfindungsgemäßen Kommunikationscontroller im Einsatz sind.

Wird, wie in der Erfindung vorgesehen, das Datenfeld von Nachrichten vergrößert, so kann es sinnvoll sein, auch das verwendete Verfahren zum Cyclic Redundancy Check (CRC) anzupassen, um eine ausreichende Fehlersicherheit zu erhalten. Insbesondere kann es vorteilhaft sein, ein anderes CRC-Polynom, beispielsweise mit höherer Ordnung, zu verwenden und entsprechend eine CRC Field abweichender Größe in den erfindungsgemäß modifizierten Nachrichten vorzusehen. Dies ist in Figur 1b dadurch dargestellt, dass das CRC Field der erfindungsgemäßen Nachrichten im dargestellten Beispiel eine Länge von L Bit aufweist, wobei L abweichend vom Norm CAN ungleich, insbesondere größer als 15 sein kann.

Die Verwendung eines modifizierten Verfahrens zur Berechnung der CRC Checksumme kann durch eine weitere Kennzeichnung, welche eine weitere Umschaltbedingung darstellt, den Busteilnehmern signalisiert werden. Diese weitere Kennzeichnung kann in einer bevorzugten Ausführungsform mit der ersten Kennzeichnung und / oder Umschaltbedingung übereinstimmen.

In den Norm CAN-Controllern wird der CRC-Code von zu sendenden CAN-Nachrichten mittels eines rückgekoppelten Schieberegisters erzeugt, in dessen Eingang die seriell gesendeten Bits der Nachricht sequenziell eingespeist werden. Die Breite des Schieberegisters entspricht der Ordnung des CRC-Polynoms. Die CRC-Codierung erfolgt durch eine Verknüpfung des Register-Inhalts mit dem CRC-Polynom während der Shift-Operationen. Wenn CAN-Nachrichten empfangen werden, werden entsprechend die seriell empfangenen Bits der Nachricht in das CRC-Schieberegister geschoben. Der CRC-Test ist erfolgreich, wenn am Ende des CRC-Feldes alle Bits des Schieberegisters auf Null stehen. Die CRC-Code-Generierung im Sendefall und der CRC-Test im Empfangsfall erfolgen beide in Hardware, ohne dass ein Eingriff der Software notwendig ist. Eine Modifikation der CRC-Codierung hat also keine Auswirkung auf die Anwendungs-Software.

Im Norm CAN-Protokoll werden die Stuff-Bits innerhalb des CAN-Nachrichten (vgl. ISO 11898-1, Kap. 10.5) nicht in die Berechnung oder Prüfung des CRC-Codes miteinbezogen (vgl. ISO 11898-1, Kap. 10.4.2.6: "... the bit stream given by the destuffed bit sequence ..."). Das hat zur Folge, dass in seltenen Fällen zwei Bit-Errors in einer Nachricht nicht erkannt werden, obwohl der CRC eigentlich bei einer Hemming-Distance von sechs bis zu fünf zufällig verteilte Bit-Errors in einer Nachricht erkennen sollte. Dieser Fall kann beispielsweise vorkommen, wenn sich durch die Bit-Fehler an einer Stelle der Nachricht ein Stuff-Bit in ein scheinbares Daten-Bit und an einer anderen Stelle ein Daten-Bit in ein scheinbares Stuff-Bit verwandelt (vgl. Unruh, Mathony und Kaiser: "Error Detection Analysis of Automotive Communication Protocols", SAE International Congress, Nr. 900699, Detroit, USA, 1990). Beispielsweise zwei Bit-Fehler, die in der mit Stuff-Bits ergänzten, übertragenen Nachricht durch irgendeine Störung wie z.B. elektromagnetische Einflüsse entstehen, können sich auf diesem Wege zu einer Vielzahl von Abweichungen zwischen dem ursprünglich gesendeten, noch nicht durch Stuff-Bits ergänzten Datenstrom und dem empfangenen, von Stuff-Bits bereinigten Datenstrom vermehren. Eine solche Vielzahl von Abweichungen kann unter Umständen durch den Cyclic Redundancy Check nicht mehr erkannt werden.

In dem modifizierten Übertragungsverfahren wird zum einen die CRC-Codierung demgegenüber so geändert, dass auch die Stuff-Bits, die innerhalb der Nachricht vor Beginn des CRC Feldes eingefügt werden, bei der CRC-Berechnung oder CRC-Prüfung miteinbezogen werden. Das heißt, es werden in dieser Ausführungsform die zum Arbitration Field, Control Field und Data Field gehörenden Stuff-Bits als Teil der durch den Cyclic Redundancy Check zu schützenden Daten behandelt. Dadurch entfällt das Risiko, dass sich zwei durch irgendeine Störung in diesen Teilen des übertragenen Bitstroms entstandene Fehler wie weiter oben beschrieben zu einer Vielzahl von Fehlern vermehren.

Es bleibt ein - wenn auch deutlich geringeres - Restrisiko dadurch, dass innerhalb des CRC-Feldes bei der Übertragung beispielsweise zwei Bitfehler entstehen könnte, welche sich beim Entfernen der Stuff-Bits zu einer entsprechenden Vielzahl von Abweichungen vermehren.

Die Datenübertragungssicherheit kann für diesen Fall noch weiter dadurch erhöht werden, dass zusätzliche Fixed-Stuff-Bits oder Fixed-Stuff-Bit-Sequenzen an festgelegten Positionen in das CRC Field eingefügt werden. (Im Folgenden wird nicht mehr zwischen Fixed-Stuff-Bits und Fixed-Stuff-Bit-Sequenzen unterschieden, es können mit Fixed-Stuff-Bit-Sequenzen auch einzelne Bits gemeint sein.) Hierbei handelt es sich im Gegensatz zu den normalen Stuff-Bits um beispielsweise zwingend an festen Positionen eingefügte Bits, die ein Verletzen der normgemäßen Stuffing-Regel verhindern. Hierzu kann eine zusätzliche Fixed-Stuff-Bedingung definiert werden, welche das Einfügen der Fixed-Stuff-Bit-Sequenz auslöst. Es kann beispielsweise das Stuffing-Steuerwerk von dem normgemäßen Modus mit datenabhängiger Steuerung in einen zusätzlichen Modus mit zählerabhängiger Steuerung umgeschalten werden. Immer wenn ein Bitzähler einen vorgegebenen Wert, beispielsweise drei oder vier, erreicht, wird die Fixed-Stuff-Bedingung ausgelöst und eine Fixed-Stuff-Bit-Sequenz eingefügt. Im einfachsten Fall ist die Vorschrift zum Einfügen der Fixed-Stuff-Bit-Sequenz identisch zum Einfügen der normgemäßen Stuff-Bits, das heisst es wird ein einzelnes, dem vorangegangenen Bit inverses Bit in den übertragenen Bitstrom eingefügt.

Gemäß den Protokoll-Regeln des Norm-CAN wird nach jeweils fünf Bits mit gleichem Wert durch den Sender ein zusätzliches Stuff-Bit mit entgegengesetztem Wert in den Datenstrom eingefügt, um das Auftreten von Signalflanken sicherzustellen, welche für die Synchronisation der Busteilnehmer, insbesondere Abtastzeitpunkte benötigt werden. Erfindungsgemäß werden im dargestellten Ausführungsbeispiel in das CRC Field nach jeweils vier Bits des CRC ein oder mehrere Bits eingefügt, wobei das erste eingefügte Bit den entgegengesetzten Wert des vorangehenden Bits aufweist. Im einfachsten Fall wird also jedes fünfte Bit als inverses Bit zum vorangehenden Bit übertragen. Dadurch ist eine Fehlinterpretation von Stuff-Bits als Daten-Bits oder von Daten-Bits als Stuff-Bits aufgrund von Bitfehlern nicht möglich, da die Position der Stuff-Bits nicht von den Werten zuvor übertragener Bits abhängt. Weiterhin kann jedes Fixed-Stuff-Bit beziehungsweise jede Fixed-Stuff-Bit-Sequenz einzeln auf Korrektheit geprüft werden, da der Wert von einer lokalen Bedingung (Wert des vorausgehenden Bits) abhängig ist. Alternative Ausführungsformen können beispielsweise vorsehen, bereits nach jeweils drei Bits des CRC eine Fixed-Stuff-Bit-Sequenz einzufügen, oder abwechselnd nach jeweils drei, zwei oder vier Werten in einer beliebigen Reihenfolge. Auch kann das Verfahren auf Bereiche der Nachricht außerhalb des CRC Field ausgedehnt werden.

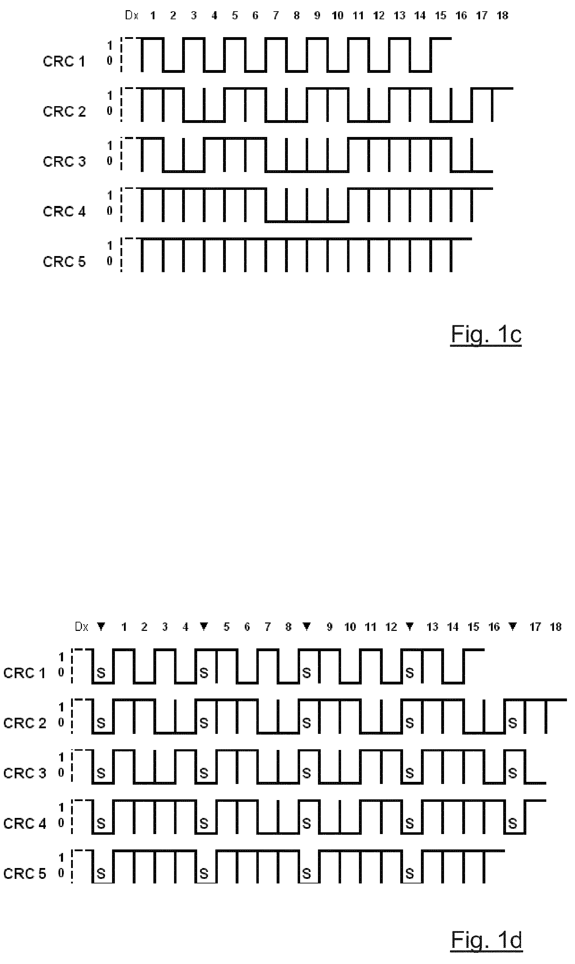

Einige Beispiele für das Einfügen der Fixed-Stuff-Bits beziehungsweise Fixed-Stuff-Bit-Sequenzen sind in den Figuren 1d und 1e dargestellt.
Figur 1c stellt eine Reihe von Bitfolgen aus einem zu übertragenen Datenstrom vor dem Einfügen irgendwelcher (Fixed-)Stuff-Bits dar. Die mit CRC1, ..., CRC5 bezeichneten Abschnitte entsprechen jeweils dem letzten Bit eines Datenfeldes Dx und einer aus 15 bis 18 Bit bestehenden CRC-Sequenz. Die Bitfolge ist willkürlich gewählt. In CRC3 würde in der normgemäßen Übertragung nach Bit 15 ein dominantes (Wert "0") Stuff-Bit eingefügt, in CRC4 ebenfalls. Weitere Stuff-Bits wären abhängig vom Inhalt der vorangegangenen, nicht dargestellten Datenbits zumindest in den Sequenzen CRC4 und CRC5 möglicherweise vorhanden. Die Position ist jedoch abhängig von Details der vorangegangenen Daten.

In Figur 1d ist demgegenüber dargestellt, wie durch eine Ausführungsform des erfindungsgemäßen Verfahrens an vorgegebenen, durch ein Dreieck bezeichneten Positionen im Datenstrom Fixed-Stuff-Bits, die durch ein "S" gekennzeichnet sind, eingefügt werden. In Figur 1e ist ein analoges Bild dargestellt mit dem Unterschied, dass hier jeweils eine Sequenz aus zwei Fixed-Stuff-Bits eingefügt wurde. In beiden Fällen liegen zwischen je zwei Fixed-Stuff-Bit-Sequenzen vier Bits des eigentlichenn Datenstromes. Der ebenfalls mögliche Fall, dass weniger (beispielsweise drei) oder wechselnde Anzahlen von Bits zwischen den Fixed-Stuff-Bit-Sequenzen liegen, ist nicht dargestellt.

In einer vorteilhaften Ausführungsform wird der Kommunikationscontroller so ausgelegt, dass er Kompatibilität zum Norm CAN aufweist, also in einem Norm CAN Bussystem normgemäß arbeitet, während er in einem erfindungsgemäß modifizierten Bussystem einerseits größere Datenfelder in den Nachrichten zulässt und andererseits auch die angepasste Berechnung und Prüfung des CRC-Code durchführt.

Da am Anfang des Empfanges einer Nachricht noch nicht feststeht, ob eine Norm-konforme CAN-Nachricht oder eine erfindungsgemäß modifizierte Nachricht empfangen wird, werden in einem erfindungsgemäßen Kommunikationscontroller zwei CRC-Schieberegister implementiert, die parallel arbeiten. Nach dem Empfang des CRC Delimiter, wenn der CRC-Code im Empfänger ausgewertet wird, steht aufgrund der erfindungsgemäßen weiteren Kennzeichnung fest, welches Übertragungsverfahren angewendet wurde, und es wird dann das diesem Übertragungsverfahren zugeordnete Schieberegister ausgewertet. Die weitere Kennzeichnung kann, wie früher bereits dargestellt, mit der ersten Kennzeichnung, die die Größe des Datenfeldes und die Interpretation des Data Length Code betrifft, übereinstimmen.

Am Anfang des Sendens einer Nachricht steht zwar für den Sender bereits fest, nach welchem Übertragungsverfahren gesendet werden soll. Da es jedoch vorkommen kann, dass die Arbitration um den Buszugriff verloren wird und die begonnene Nachricht nicht gesendet, sondern stattdessen eine andere Nachricht empfangen wird, werden auch hier beide CRC-Schieberegister parallel angesteuert.

Die beschriebene Implementation zweier parallel arbeitender CRC-Schieberegister ermöglicht auch eine weitere Verbesserung:
Das CRC-Polynom des Norm CAN-Protokolls (x15 + x14 + x10 + x8 + x7 + x4 + x3 + 1) ist für eine Nachrichten-Länge von weniger als 127 Bits ausgelegt. Wenn erfindungsgemäß übertragene Nachrichten auch längere Datenfelder verwenden, ist es sinnvoll, zur Aufrechterhaltung der Übertragungssicherheit ein anderes, insbesondere längeres CRC-Polynom zu verwenden. Die erfindungsgemäß übermittelten Nachrichten erhalten dementsprechend ein geändertes, insbesondere längeres CRC Field. Im laufenden Betrieb wechseln die Kommunikationscontroller dynamisch zwischen den beiden CRC-Schieberegistern, also dem Norm CAN-gemäßen und dem erfindungsgemäßen Schieberegister, um das jeweils passende Polynom zu verwenden.

Natürlich können auch mehr als zwei Schieberegister und dementsprechend mehr als zwei CRC-Polynome abgestuft in Abhängigkeit von der Länge des Datenfeldes oder der gewünschten Übertragungssicherheit zum Einsatz kommen. In diesem Fall muss, sofern eine Kompatibilität zum Norm CAN erhalten bleiben soll, die entsprechende Kennzeichnung und die damit verbundene Umschaltbedingung angepasst werden. Beispielsweise könnte das zweite Bit des Control Field eine erste Kennzeichnung darstellen, welche ein Umschalten auf längere Datenfelder, beispielsweise gemäß DLC 1 auf Figur 2, und ein zugehöriges zweites CRC-Polynom kennzeichnet. Für Nachrichten, die längere Datenfelder enthalten und durch die erste Kennzeichnung gekennzeichnet sind, könnte beispielsweise ein zusätzliches Bit im Control Field eingefügt werden, welches die Umschaltung auf einen weiteren Satz von Datenfeldgrößen, beispielsweise DLC 3 aus Figur 2, und ein drittes CRC-Polynom kennzeichnet. Das Einfügen von zusätzlichen Bits in das Control Field von Nachrichten, die die erste Kennzeichnung aufweisen, ist möglich, da hier ohnehin ein geänderter Sende- und Empfangsprozess im Kommunikationscontroller zur Anwendung kommt, und somit derartige Änderungen berücksichtigt werden können. Die Kompatibilität mit Norm-CAN ist dadurch gegeben, dass bei Nicht-Vorliegen der ersten Kennzeichnung, im gezeigten Beispiel also bei dominantem zweitem Bit des Control Field, der Aufbau der Nachrichten exakt den Vorgaben der ISO-Norm 11898-1 folgt.

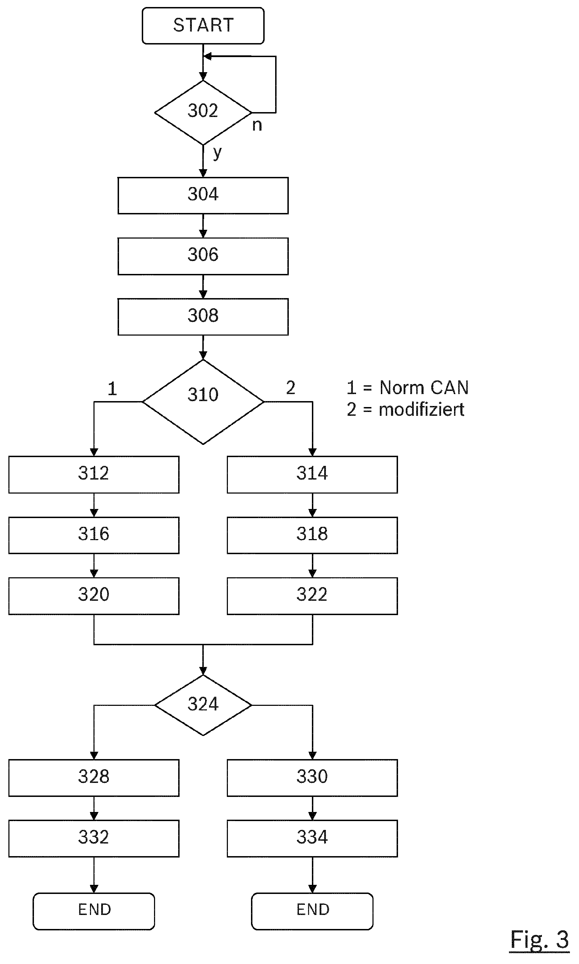

Figur 3 zeigt in vereinfachter Darstellung einen Ausschnitt des erfindungsgemäßen Empfangsprozesses, wie er auf einer Teilnehmerstation des Bussystems abläuft. Dargestellt ist hier der Fall, bei welchem eine Kompatibilität zum Norm CAN erreicht wird, indem abhängig von der ersten Umschaltbedingung das Verhalten des Kommunikationscontrollers angepasst wird. Obwohl in Figur 3 eine für die Beschreibung von Programmabläufen in Software übliche Darstellung gewählt wurde, ist das Verfahren vollständig zur Implementierung in Hardware geeignet.

Die Teilnehmerstation befindet sich zunächst in einem den Bus abtastenden Zustand, so lange auf dem Bus kein Kommunikationsverkehr herrscht. Die Abfrage 302 wartet also auf ein dominantes Bit auf dem Bus. Dieses Bit kennzeichnet den Beginn einer neuen Nachricht (Start-of-Frame).

Sobald der Beginn einer neuen Nachricht festgestellt wurde beginnt im Block 304 die Berechnung der wenigstens zwei parallel zu berechnenden CRC Checksummen. Die erste Checksumme entspricht der CRC Berechnung des Norm CAN, während die zweite Checksumme nach dem neuen Verfahren berechnet wird. Bei der zweiten CRC-Berechnung werden im dargestellten Ausführungsbeispiel die Stuff-Bits miteinbezogen, während dies bei der Berechnung gemäß Norm CAN nicht der Fall ist.

Es werden anschließend ab dem Schritt 306 die weiteren, auf das SOF-Bit folgenden Bits der Nachricht, beginnend mit dem Arbitration Field, empfangen. Falls mehrere Busteilnehmer eine Nachricht versenden wollen, wird hierbei nach dem aus dem Norm CAN üblichen Verfahren unter den Busteilnehmern ausgehandelt, welcher Busteilnehmer den Zugriff auf den Bus erhält. Der dargestellte Block 306 kennzeichnet den Empfang aller Bits, bis die erste Kennzeichnung empfangen wurde beziehungsweise die erste Umschaltbedingung feststeht. Im dargestellten Beispiel wird die erste Umschaltbedingung aus dem Control Field, beispielsweise aus dem zweiten Bit desselben, ermittelt (vgl. Figur 1). Anschließend können in Block 308 noch weitere Bits der Nachricht empfangen werden, bis ab einem bestimmten Bit der Nachricht abhängig von der ermittelten ersten Umschaltbedingung unterschiedlich verfahren wird. Diese Aufspaltung in unterschiedliche Verfahrensweisen wird durch eine entsprechende Abfrage oder Verzweigung 310 gewährleistet, wie im Folgenden beispielhaft dargestellt.

Liegt bei der Verzweigung 310, beispielsweise nach Empfang des zweiten Bits des Control Field als dominantem Bit r0, die Information vor, dass gemäß der ersten Kennzeichnung die Kommunikation nach Norm CAN erfolgt (der mit "1" bezeichnete Pfad der Figur 3), so werden im Schritt 312 die weiteren Bits des Control Field eingelesen. Aus diesen Bits wird gemäß Norm CAN der Data Length Code ausgewertet und es wird anschließend in Schritt 316 die zugehörige Menge an Daten, maximal 8 Byte, entsprechend dem Datenfeld, empfangen. Im Schritt 320 wird dann das 15 Bit umfassende CRC Feld empfangen. Liegt bei der Verzweigung 324 die Information vor, dass die die vom Sender übermittelte und die vom Empfänger selbst ermittelte CRC Checksumme übereinstimmen, wird in Block 328 ein dominantes Acknowledge-Bit gesendet. Es ist zu beachten, dass in diesem Fall die normgemäße CRC Checksumme verglichen wird, da die Kommunikation nach Norm CAN erfolgt. Wird keine Übereinstimmung festgestellt, wird (Block 330) das Acknowledge-Bit rezessiv gesendet. Anschließend folgen in Schritt 332 beziehungsweise 334 der ACK Delimiter und die EOF Bits. Damit ist ein Empfangsprozess für eine Nachricht beendet.

Es gelten hinsichtlich senderseitigem Einfügen und empfängerseitigem Entfernen von Stuff-Bits die Regeln der CAN-Norm ISO 11898-1. Die angegebenen Feldergrößen beziehen sich auf die Datenmenge nach Entfernen der Stuff-Bits. Auch für die Berechnung der normgemäßen CRC Checksumme werden die eingefügten Stuff-Bits aus dem empfangenen Datenstrom wieder entfernt.

Liegt hingegen bei der Verzweigung 310, beispielsweise nach Empfang des zweiten Bits des Control Field als rezessivem Bit EDL, die Information vor, dass das erfindungsgemäß modifizierte Kommunikationsverfahren anzuwenden ist (der mit "2" bezeichnete Pfad der Figur 3), so werden im Block 314 die weiteren Bits des Control Field eingelesen. Hier können beispielsweise auch zusätzliche, im Control Field ergänzte Bits eingelesen werden, die beispielsweise zur Umschaltung auf ein weiteres abweichendes CRC-Polynom dienen können, oder auch zur Umschaltung der Bitlänge, zur Synchronisierung oder zu weiteren Zwecken. Auf dieses Aspekt wird noch detaillierter eingegangen. Aus dem Ergebnis wird der Data Length Code nach der neuen Interpretation, für die einige Beispiele tabellenartig in Figur 2 aufgeführt sind, ermittelt. Im Block 318 wird die entsprechende Menge an Daten, also für das Beispiel DLC 1 aus der Tabelle in Figur 2 bis zu 15 Byte, für das Beispiel DLC 2 bis zu 16 Byte, für das Beispiel DLC 3 bis zu 64 Byte Daten empfangen. Im Block 322 wird das erfindungsgemäß abweichende, insbesondere längere CRC Feld empfangen. Liegt bei der Verzweigung 324 die Information vor, dass die vom Sender übermittelte und die vom Empfänger selbst ermittelte CRC Checksumme übereinstimmen, wobei in diesem Fall der Vergleich auf der erfindungsgemäß abweichenden CRC Checksumme basiert, wird in Block 328 ein dominantes Acknowledge-Bit gesendet. Andernfalls wird (Block 330) das Acknowledge-Bit rezessiv gesendet. Anschließend folgen in Schritt 332 beziehungsweise 334 der ACK Delimiter und die EOF Bits. Damit ist ein Empfangsprozess für eine Nachricht beendet.

Es gelten hinsichtlich senderseitigem Einfügen und empfängerseitigem Entfernen von Stuff-Bits auch hier die Regeln der CAN-Norm ISO 11898-1 für die Übertragung von Arbitration Field, Control Field und Data Field. Im Block 322 wird das Stuffing-Steuerwerk vom datenabhängigen Modus in den zählerabhängigen Modus umgeschalten. Dadurch werden die vom Sender in regelmäßigen Abständen eingefügten Fixed-Stuff-Bits oder Fixed-Stuff-Bit-Sequenzen empfängerseitig für die Weiterverarbeitung wieder entfernt. Die angegebenen Feldergrößen beziehen sich auf die Datenmenge nach Entfernen der Stuff-Bits beziehungsweise Fixed-Stuff-Bits. Für die Berechnung der von der Norm abweichenden CRC Checksumme werden die eingefügten Stuff-Bits miteinbezogen, die erfindungsgemäß eingefügten Fixed-Stuff-Bits oder Fixed-Stuff-Bit-Sequenzen werden jedoch aus dem empfangenen Datenstrom wieder entfernt.

In Figur 3 wurde der Fall dargestellt, in welchem die weitere Kennzeichnung, welche die zu verwendende CRC bestimmt, mit der ersten Kennzeichnung, die die Größe des Datenfeldes und die Interpretation des Data Length Code betrifft, übereinstimmt. Es wurde also vor dem Empfang 320 beziehungsweise 322 der CRC Checksummen nicht nochmals abgefragt, welche CRC gemäß der weiteren Kennzeichnung zu empfangen und für die Verzweigung 324 auszuwerten ist. Durch eine einfache Modifikation des Ablaufdiagrammes aus Figur 3 ist diese zusätzliche Abfrage gegebenenfalls in den Ablauf aufnehmbar.

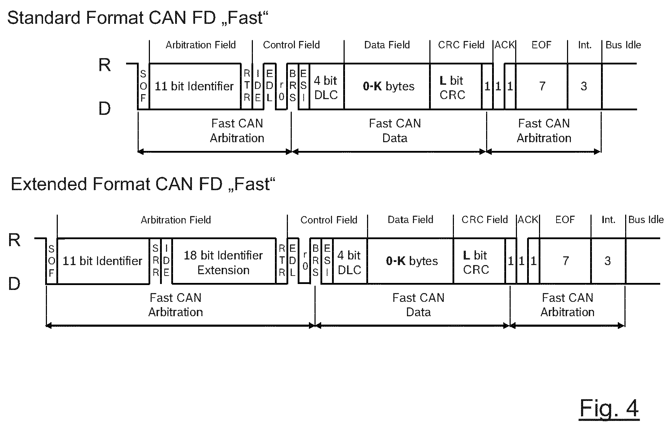

Figur 4 zeigt zwei weitere Beispiele für erfindungsgemäß modifizierte Nachrichten, bei welchen gegenüber Figur 1b zusätzlich Bereiche innerhalb der Nachricht festgelegt sind, in welchen erfindungsgemäß eine unterschiedliche Bitlänge verwendet wird und somit die einzelnen Bits schneller über den Bus übertragen werden. Die Nachrichten tragen daher die Bezeichnung "CAN FD Fast". Für die zwei möglichen Adressierungsvarianten von Nachrichten, das Standard Format und das Extended Format, sind in Figur 4 Bereiche eingezeichnet, in denen zwischen zwei Zuständen, bezeichnet mit Fast-CAN-Arbitration und Fast-CAN-Data umgeschaltet wird. Diese Umschaltung zwischen den beiden Zuständen bewirkt, dass für den entsprechenden Teil der Nachricht die Bitlängen verkürzt und somit die einzelnen Bits schneller über den Bus übertragen werden. Dadurch kann die Übertragungszeit für eine Nachricht gegenüber dem normgemäßen Verfahren verkürzt werden. Der zugehörige Wechsel der zeitlichen Bitlänge kann beispielsweise durch Verwendung mindestens zweier unterschiedlicher Skalierungsfaktoren zur Einstellung der Bus-Zeiteinheit relativ zu einer kleinsten Zeiteinheit oder dem Oszillatortakt im laufenden Betrieb realisiert werden. Die Umschaltung der Bitlänge, sowie die entsprechende Veränderung des Skalierungsfaktors sind in Figur 4 ebenfalls beispielhaft dargestellt.

Der Übergang zwischen den Zuständen Fast-CAN-Arbitration und Fast-CAN-Data erfolgt in Nachrichten, welche die erste Kennzeichnung EDL aufweisen, abhängig von einer zweiten Kennzeichnung, die den Teilnehmern der Datenübertragung signalisiert, dass die verkürzte Bitlänge angewendet wird. In dem hier dargestellten Ausführungsbeispiel ist die Position dieser Kennzeichnung ein zusätzliches Bit im Control Field, das mit BRS (Bit Rate Switch) bezeichnet ist. Es wird im gezeigten Beispiel als viertes Bit des Control Field übertragen.

In dem dargestellten Fall, in dem also auf die erste Kennzeichnung EDL die zweite Kennzeichnung BRS folgt, werden im erfindungsgemäßen Übertragungsverfahren Nachrichten übertragen, deren Bitlänge deutlich verkürzt, deren Datenfeldgröße auf Werte oberhalb 8 Byte ausdehnbar, und deren CRC an das größere Datenfeld angepasst und auf zuvor in die Nachricht eingefügte Stuff-Bits ausgedehnt ist. Erhebliche Steigerung der Übertragungskapazität über das Bussystem bei gleichzeitig verbesserter Übertragungssicherheit werden so erreicht.

Die schnellere Übertragung beginnt im dargestellten Beispiel unmittelbar nach Versenden der zugehörigen Kennzeichnung und wird unmittelbar nach Erreichen des für die Rückumschaltung festgelegten Bits beendet oder dann, wenn ein Grund zum Start eines Error-Frames erkannt wurde.

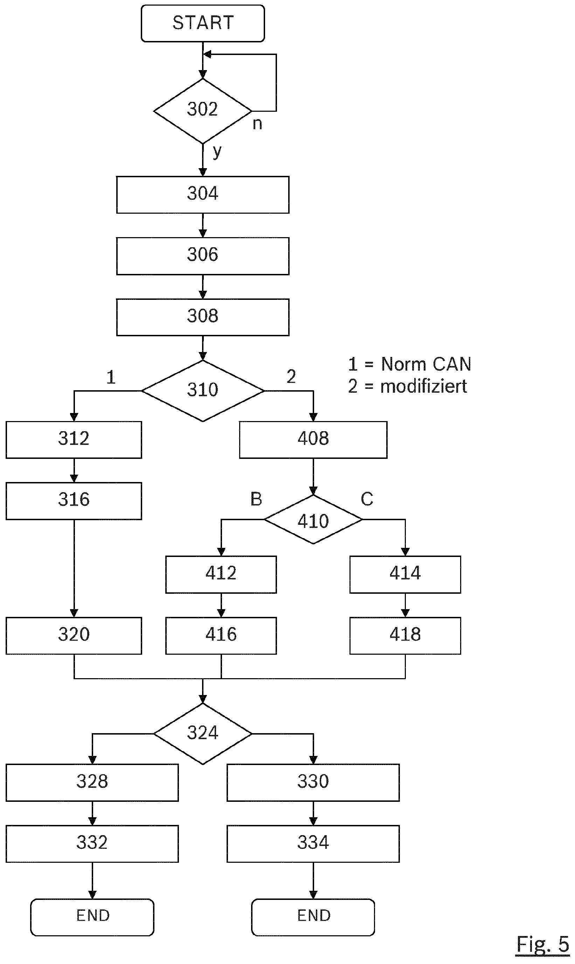

Figur 5 zeigt einen gegenüber Figur 3 modifizierten Empfangsprozess, bei welchem zusätzlich abhängig von der zweiten Kennzeichnung BRS zwischen den Zuständen Fast-CAN-Arbitration und Fast-CAN-Data umgeschaltet wird. Liegt bei der Verzweigung 310, beispielsweise nach Empfang des zweiten Bits des Control Field als rezessivem Bit EDL, die Information vor, dass das erfindungsgemäß modifizierte Kommunikationsverfahren anzuwenden ist, so werden im Block 408 die nächsten Bits des Control Field eingelesen. Wird das zur zweiten Kennzeichnung dienende Bit, beispielsweise das vierte Bit BRS des erfindungsgemäß erweiterten Control Field, mit dem vorgesehenen Wert, beispielsweise rezessiv, empfangen, so wird beispielsweise am Sample Point dieses Bits der Zustand Fast-CAN-Data eingenommen, also auf die verkürzte Bitlänge umgeschalten (Pfad "C"). Weist das betreffende Bit den umgekehrten Wert auf, also in diesem Beispiel dominant, so erfolgt keine Verkürzung der Bitlänge (Pfad "B"). In den Blöcken 412 beziehungsweise 414 erfolgt der Empfang der verbleibenden Bits des Control Field inklusive des Data Length Code und der Empfang des Datenfeldes gemäß der Größeninformation aus dem Data Length Code. Im Block 412 wird mit normaler Bitlänge empfangen, im Block 414 mit der verkürzten Bitlänge. In den Blöcken 416 beziehungsweise 418 wird das erfindungsgemäß abweichende, insbesondere längere CRC Field eingelesen. Am letzten Bit des CRC Field, dem CRC Delimiter wird im Block 418 wieder in den Zustand Fast-CAN-Arbitration mit gewöhnlicher Bitrate umgeschalten. Anschließend wird bei der Verzweigung 324 analog zu Figur 3 geprüft, ob die vom Sender übermittelte und die vom Empfänger selbst ermittelte CRC Checksumme übereinstimmen und es wird abhängig davon weiter verfahren, wie schon in Figur 3.

Auch hier gelten hinsichtlich senderseitigem Einfügen und empfängerseitigem Entfernen von Stuff-Bits die Regeln der CAN-Norm ISO 11898-1 für die Übertragung von Arbitration Field, Control Field und Data Field. In den Blöcken 416 beziehungsweise 418 wird das Stuffing-Steuerwerk vom datenabhängigen Modus in den zählerabhängigen Modus umgeschalten. Dadurch werden die vom Sender in regelmäßigen Abständen eingefügten Fixed-Stuff-Bits oder Fixed-Stuff-Bit-Sequenzen empfängerseitig wieder entfernt. Die angegebenen Feldergrößen beziehen sich auf die Datenmenge nach Entfernen der Stuff-Bits beziehungsweise Fixed-Stuff-Bits. Für die Berechnung der von der Norm abweichenden CRC Checksumme werden die eingefügten Stuff-Bits miteinbezogen, die erfindungsgemäß eingefügten Fixed-Stuff-Bits oder Fixed-Stuff-Bit-Sequenzen werden jedoch aus dem empfangenen Datenstrom wieder entfernt.

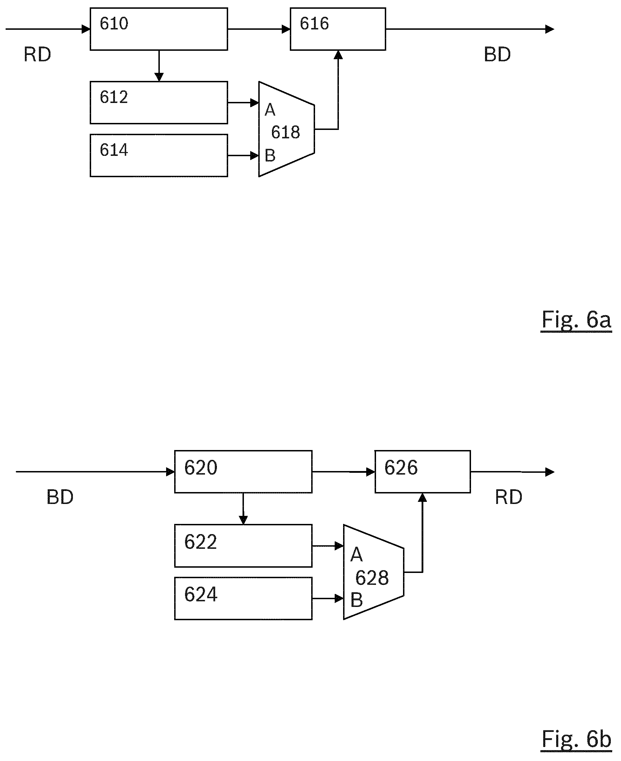

Figur 6a zeigt schematisch einen Ausschnitt des Steuerwerkes, welches in erfindungsgemäßen Vorrichtungen, insbesondere Kommunikationscontrollern, das Einfügen von zusätzlichen Fixed-Stuff-Bits oder Fixed-Stuff-Bit-Sequenzen in gesendete Nachrichten durchführt. Figur 6b zeigt schematisch einen Ausschnitt des Steuerwerkes, welches in erfindungsgemäßen Vorrichtungen das Entfernen der zusätzlichen Fixed-Stuff-Bits oder Fixed-Stuff-Bit-Sequenzen aus empfangenen Nachrichten durchführt. Die eigentlichen Nutzdaten, welche übertragen werden sollen sind mit RD ("Rohdaten") bezeichnet, die durch (Fixed-)Stuff-Bits ergänzten Daten, welche auf dem Bussystem vorliegen, sind mit BD ("Busdaten") bezeichnet.

Bei der üblichen CAN-Bit-Stuffing Methode werden sowohl auf Empfänger- wie auch auf Senderseite zum Abtastzeitpunkt abgetastete Bits in ein fünf Bit breites Stuff-Schieberegister 610 bzw. 620 geschoben. Wenn alle fünf Bits dieses Registers den gleichen Wert haben, ist dies eine Stuff-Bedingung. Diese wird in einer Auswerteeinheit 612 bzw. 622 festgestellt. Wenn keine Stuff-Bedingung vorliegt, werden die Daten-Schieberegister im Sender und im Empfänger einmal pro CAN-Bitzeit um ein Bit geschoben. Der Sender einer Nachricht sendet jeweils das Ausgangs-Bit seines Daten-Schieberegisters, der Empfänger schiebt das abgetastete Bit in sein Daten-Schieberegister. Wenn die Auswerteeinheit des Senders 612 eine Stuff-Bedingung feststellt, bewirkt eine Einfügeeinheit 616, dass die Daten-Schieberegister nicht geschoben werden, sondern der Sender als folgendes Bit ein zum vorherigen Bit inverses Bit sendet. Die Busdaten BD sind somit gegenüber den Rohdaten RD um dieses Bit ergänzt. Stellt die Auswerteeinheit des Empfängers 622 in den Busdaten BD eine Stuff-Bedingung fest, bewirkt eine Entfernungseinheit 626, dass das folgende Bit nicht in das Daten-Schieberegister geschoben wird, sondern geprüft wird, ob das Bit invers zum vorherigen Bit ist. (Ist dies nicht der Fall, wird ein Stuff-Error erkannt.) Das Bit wird aus den Busdaten entfernt und ist in den Rohdaten RD, die der Weiterverarbeitung zugeführt werden, dann nicht mehr vorhanden.

In dem erfindungsgemäßen Übertragungsverfahren wird das Einfügen bzw. Entfernen von Stuff-Bits vorzugsweise durch ein zwischen wenigstens zwei Modi umschaltbares Steuerwerk gesteuert, wie in den Figuren 6a und 6b dargestellt. Das Steuerwerk wird um ein Teilsteuerwerk 614 bzw. 624 und eine Auswahleinheit 618 bzw. 628 ergänzt. Beispielsweise während der Übertragung der durch die CRC abgesicherten Bits im Arbitration Field, Control Field und Data Field ist (wie im Norm-CAN-Verfahren) das Einfügen bzw. Entfernen von Stuff-Bits vom Inhalt des Stuff-Schieberegisters 610 bzw. 620 abhängig. In einem anderen Teilbereich der Nachricht, beispielsweise während der Übertragung des CRC-Felds der Nachricht, wird auf ein zählerabhängiges Verhalten umgeschaltet. Hierzu wird im dargestellten Beispiel ein Teilsteuerwerk 614 bzw. 624 mit fünf Zuständen verwendet, von denen ein Zustand einer Fixed-Stuff-Bedingung entspricht. Wie beim Vorliegen einer Stuff-Bedingung wird beim Vorliegen der Fixed-Stuff-Bedingung die Einfügeeinheit 616 beziehungsweise Entfernungseinheit 626 angesprochen. Das Teilsteuerwerk 614 bzw. 624 wechselt mit jedem CAN-Bittakt zyklisch zwischen den fünf Zuständen, so dass für jedes fünfte Bit die Einfügeeinheit 616 beziehungsweise Entfernungseinheit 626 angesprochen wird. Dann wird, wie im Norm-CAN-Verfahren, ein zum vorherigen Bit inverses Bit vom Sender in die Busdaten BD eingefügt, und andererseits vom Empfänger geprüft und dann wieder entfernt. Bei Anwendung dieses Verfahrens werden im CRC-Feld also immer Gruppen von 4 Bits der CRC-Sequenz übertragen, getrennt durch ein einzelnes Fixed-Stuff-Bit.

Wie früher beschrieben, kann an Stelle der Fixed-Stuff-Bits auch jeweils eine Fixed-Stuff-Bit-Sequenz eingefügt werden, beispielsweise nach einer "1" eine Sequenz "0 1", oder nach einer "0" eine Sequenz "1 0". Es könnte auch beispielsweise nach jedem dritten Daten-Bit der CRC-Sequenz eine Fixed-Stuff-Bit-Sequenz eingefügt werden. Es können auch weitere Modi vorgesehen werden, so dass beispielsweise abhängig vom Modus entweder nach jedem dritten Daten-Bit, odert nach jedem vierten Daten-Bit eine Fixed-Stuff-Bit-Sequenz folgt.

Das Teilsteuerwerk 614 bzw. 624 wird beispielsweise bei Beginn der CRC-Feldübertragung so eingestellt, dass die Fixed-Stuff-Bedingung erfüllt ist. Damit beginnt das CRC-Feld mit einem Fixed-Stuff-Bit oder einer Fixed-Stuff-Bit-Sequenz und es sind die Positionen aller Fixed-Stuff-Bits in dem CRC-Feld der Nachricht fest vorgegeben. Falls die Stuff-Bedingung zu Beginn des CRC-Feldes ohnehin erfüllt ist, weil z.B. das Daten-Feld mit fünf gleichen Bits endet, beantwortet das Stuff-Bit am Beginn des CRC-Feldes auch diese Stuff-Bedingung mit.

Alternativ kann das Teilsteuerwerk 614 bzw. 624 auch als zyklischer Stuffing-Zähler, beispielsweise mit Wertebereich 0 bis 4 realisiert werden, der zu Beginn des CRC-Felds auf 0 zurückgesetzt wird und dessen wiederkehrender Wert 0 jeweils das Einfügen eines Fixed-Stuff-Bits oder einer Fixed-Stuff-Bit-Sequenz auslöst.

Alle Stuff-Bits vor dem letzten Daten-Bit des Daten-Feldes werden von der CRC-Prüfung mit abgesichert, die Fixed-Stuff-Bits nach dem letzten Daten-Bit des Daten-Feldes werden bei der Generierung und Prüfung der CRC-Sequenz ausgeblendet.

Das auf das rezessive Bit der ersten Kennzeichnung EDL in den erfindungsgemäßen Nachrichten folgende, stets dominante Bit r0 (beziehungsweise bei Extended Adressierung eventuell r1) führt, wie beispielsweise in den Figuren 1b und 4 abzulesen ist, zu einer rezessivdominant-Flanke in allen erfindungsgemäßen Daten-Nachrichten. Diese Flanke kann zur Verbesserung der Synchronisierung zwischen den Busteilnehmern herangezogen werden, was insbesondere bei der vorgesehenen Umschaltung auf die kürzeren Bitlängen von Vorteil ist.

Wenn alle Busteilnehmer im Netzwerk auf den sendenden Teilnehmer synchronisiert sind, kann problemlos auf die kürzere Bitlänge umgeschaltet werden. Es kann aber auch vorkommen, dass an dem für die Umschaltung vorgesehenen Bit nicht alle Busteilnehmer auf den sendenden Teilnehmer synchronisiert sind, beispielsweise, wenn ein erster sendender Teilnehmer am Ende des Arbitration-Fields die Bitfolge "dominant-dominant" sendet und ein zweiter sendender Teilnehmer, der noch im Rahmen der Arbitrierung den Zugriff auf den Bus erlangen möchte, die Bitfolge "dominant-rezessiv" sendet. Der zweite sendende Teilnehmer verliert die Arbitration an dem rezessiven Bit und wird zum Empfänger. Bis zu dem rezessiven Bit hatten die beiden Sender dieselbe Bitfolge gesendet. Da beide Transmitter aufgrund der Laufzeiten über den CAN-Bus und die Transceiver die jeweils selbst gesendeten Flanken von rezessiv nach dominant früher sehen, als die vom jeweils anderen Sender gesendeten, hat sich keiner auf den anderen synchronisiert.
Wenn nun die Bitlänge umgeschaltet wird, bevor der neu zum Empfänger gewordene Busteilnehmer sich auf den verbleibenden Sender synchronisiert hat, erfolgt die Synchronisierung nach der Umschaltung, im Bereich der kürzeren Bitlänge. Die Phasenverschiebung durch die Synchronisation ist dann relativ zur Bitlänge größer. Je nach Signal-Laufzeit zwischen den beiden Busteilnehmern kann die Phasenverschiebung so groß werden, dass es zur Fehl-Synchronisation kommt und ein Bit falsch abgetastet wird. Der Empfänger wird dann die empfangene Nachricht nicht als gültig anerkennen und mit einem Error-Frame zerstören.

In der Norm-CAN-Kommunikation tritt dieses Problem nicht auf, da dort das Propagation-Segment des CAN Bit-Timings die durch Signal-Laufzeiten bewirkten Phasenverschiebungen zwischen den Busteilnehmern ausgleicht. In der Konfiguration für eine kürzere Bitlänge kann das Propagation-Segment jedoch minimiert oder ganz weggelassen werden, um die Bitlänge zu verkürzen.

Um die Fehl-Synchronisation nach der Umschaltung der Bitlänge zu vermeiden, muss eine Synchronisierung vor der Umschaltung der Bitlänge durch geeignete Maßnahmen garantiert werden. Dies kann dadurch erreicht werden, dass an der Flanke von EDL (rezessiv) zu r0 beziehungsweise r1 (dominant) eine Synchronisierung durchgeführt wird. Insbesondere kann eine Hard-Synchronisierung anstelle der sonst innerhalb eines Frames üblichen Re-Synchronisierung durchgeführt werden. Diese wird beispielsweise auch am Start-of-Frame-Bit durchgeführt und gleicht mögliche Phasenverschiebungen sicher vollständig aus. Bei der sonst innerhalb eines Frames üblichen Re-Synchronisierung kann ein Rest-Fehler verbleiben, wenn der Phasen-Fehler größer als die konfigurierte Re-Synchronisations-Sprungweite (SJW) ist.

Als eine Variante des dargestellten Verfahrens kann die Umschaltung auf verkürzte Bitlängen abhängig vom Wert der zweiten Kennzeichnung BRS zusätzlich mit dem dominanten Wert des vorher übertragenen r0-Bit gekoppelt werden, so dass nur auf die kürzere Bitlänge umgeschaltet wird, wenn r0 dominant übertragen wurde. Diese Ergänzung des Verfahrens erlaubt es, eine Bitfolge, bei welcher auf das rezessive EDL-Bit ein rezessives Bit an Stelle des dominanten r0-Bits folgt, für zukünftige, weitere Nachrichtenformate zu verwenden, wie zum Beispiel für eine von der Norm abweichende Bit-Codierung in Teilbereichen der Nachricht.

Die Möglichkeit, zusätzliche Bits im Control Field der erfindungsgemäßen Nachrichten einzufügen, kann weiterhin genutzt werden, um die Erkennung von Busteilnehmern, welche sich im "Error Passive" Zustand befinden, zu erleichtern. Ein Busteilnehmer mit Kommunikationscontroller aus dem Stand der Technik nimmt den Zustand "Error Passive" ein, wenn der Transmit oder Receive Error Count 128 oder höher ist. Befindet sich der Busteilnehmer im Zustand "Error Passive", so darf er keine "Active Error Flags" (sechs aufeinanderfolgende dominante Bits) senden. Detektiert der Busteilnehmer einen Fehler, sendet er ein "Passive Error Flag" (sechs aufeinanderfolgende rezessive Bits). Ein "Passive Error Flag" ist auf dem CAN Bus jedoch nicht vom Ruhe-Pegel zu unterscheiden. Andere Busteilnehmer können unter Umständen also nur indirekt erkennen, dass ein Busteilnehmer sich im Zustand "Error Passive" befindet.

Der Vorteil des hier vorgeschlagenen Verfahrens liegt demgegenüber darin, dass mit diesem Verfahren Busteilnehmer, die sich im Zustand "Error Passive" befinden, von den anderen Busteilnehmern eindeutig identifiziert werden können. Dies ist bisher über den Empfang eines "Passive Error Flags" nicht möglich. Den Zustand "Error Passive" kann in Busteilnehmern aus dem Stand der Technik nur der lokal am CAN-Controller angeschlossene Mikroprozessor erkennen und z.B. durch eine entsprechende Status-Nachricht den anderen Busteilnehmern mitteilen. Durch das neue Verfahren ist es für den Mikroprozessor nicht notwendig, eine Status-Nachricht zu versenden. Außerdem ist in diesem Fall die Information über den "Error Passive" Zustand zum Sende-Zeitpunkt aktuell, während der Zustand sich bei Versenden einer Status-Nachricht zwischen dem Erstellen der Status-Nachricht durch den Mikroprozessor und dem Sende-Zeitpunkt geändert haben.

In dem hier beschriebenen Verfahren wird die Information über den Zustand "Error Passive" eines Kommunikationscontrollers in die von dem Busteilnehmer ohnehin versandten Botschaften integriert. Hierzu wird das Control Field der Nachricht um ein weiteres Bit (ESI) erweitert. Dieses Bit wird, wie in Figur 1b dargestellt, nach der ersten Kennzeichnung (EDL) und vor dem DLC eingefügt, beispielsweise direkt vor oder direkt nach dem BRS-Bit. Ein Busteilnehmer, der sich im Zustand "Error Passive" befindet, sendet dieses Bit beispielsweise dominant, während andernfalls das Bit rezessiv gesendet wird. Eine umgekehrte Logik ist ebenfalls möglich.

Das vorgestellte Übertragungsverfahren eignet sich im normalen Betrieb eines Kraftfahrzeuges zur Übertragung von Daten zwischen wenigstens zwei Steuergeräten des Kraftfahrzeuges, welche über einen geeigneten Datenbus verbunden sind. Es ist aber gleichermaßen vorteilhaft einsetzbar während der Fertigung oder Wartung eines Kraftfahrzeuges zur Übertragung von Daten zwischen einer zum Zwecke der Programmierung mit einem geeigneten Datenbus verbundenen Programmierungseinheit und wenigstens einem Steuergerät des Kraftfahrzeuges, welches mit dem Datenbus verbunden ist. Weiterhin ist es auch möglich, das Verfahren in der industriellen Automatisierung einzusetzen, also beispielsweise zur Übertragung von Steuerinformation zwischen verteilten, durch den Bus miteinander verbundenen Steuereinheiten, die den Ablauf eines industriellen Fertigungsablaufes steuern. In diesem Umfeld können auch sehr lange Busleitungen auftreten und es kann besonders sinnvoll sein, das Bussystem für die Arbitirierungsphase mit einer relativ langen Bitlänge zu betreiben, beispielsweise mit 16, 32 oder 64 Mikrosekunden, so dass die Bussignale sich während des Arbitirierungsvorganges wie erforderlich auf dem gesamten Bussystem ausbreiten können. Anschließend kann dann für einen Teil der Nachricht, wie beschrieben, auf kürzere Bitlängen umgeschalten werden, um die mittlere Übertragungsrate nicht zu klein werden zu lassen.

Insgesamt stellt das Verfahren ein Übertragungsverfahren dar, welches sich dadurch auszeichnet, dass ein Norm-CAN Controller nur minimal geändert werden muss, um erfindungsgemäß arbeiten zu können. Ein erfindungsgemäßer Kommunikationscontroller, der auch als Norm-CAN Controller arbeiten kann, ist nur unwesentlich größer als ein herkömmlicher Norm-CAN Controller. Das zugehörige Anwendungs-Programm muss nicht geändert werden, und schon dann werden Vorteile in der Geschwindigkeit der Datenübertragung erzielt. Durch Verwendung der erweiterten Größe des Datenfeldes und der zugehörigen DLC und CRC kann die Geschwindigkeit der Datenübertragung weiter gesteigert werden, die Anpassungen in der Anwendungs-Software sind minimal. Es können weite Teile des CAN-Conformance-Tests (ISO 16845) übernommen werden. Es ist auch möglich, das erfindungsgemäße Übertragungsverfahren mit den Ergänzungen des TTCAN (ISO 11898-4) zu kombinieren.

## Patentansprüche

1. Verfahren zur seriellen Datenübertragung in einem Bussystem mit mindestens zwei Busteilnehmern, die über den Bus Nachrichten austauschen, wobei der Sendezugriff auf den Bus für jede Nachricht an einen Busteilnehmer durch das Arbitrierungsverfahren gemäß der CAN-Norm ISO 11898-1 vergeben wird,
wobei die Nachrichten einen logischen Aufbau gemäß der CAN-Norm aufweisen, also aus Start-of-Frame-Bit, Arbitration Field, Control Field, Data Field, CRC Field, Acknowledge Field und End-of-Frame-Field aufgebaut sind,
wobei bei Vorliegen einer Stuff-Bedingung zwischen die zu übertragenden Daten-Bits Stuff-Bits nach den Regeln der CAN-Norm in die Nachricht eingefügt werden,
wobei zu Beginn einer Nachricht zusätzlich zur Berechung des CRC Field gemäß CAN-Norm die Berechnung wenigstens einer weiteren CRC Sequenz mittels eines von der CAN-Norm abweichenden Generator-Polynoms gestartet wird, wobei bei wenigstens einer der zusätzlich ausgeführten CRC-Berechnungen abweichend von der CAN-Norm auch die Stuff-Bits, die vor Beginn des CRC Field eingefügt wurden, berücksichtigt werden,
wobei abhängig von einer geeigneten Kennzeichnung (EDL) entschieden wird, welches Ergebnis aus einer der parallel gestarteten CRC-Berechnungen zur Prüfung der korrekten Datenübertragung verwendet wird,
**dadurch gekennzeichnet, dass** für wenigstens einen Wert der Kennzeichnung eine zusätzliche Bedingung überprüft wird, bei deren Vorliegen vom Sender zumindest in Teile der Nachricht Fixed-Stuff-Bit-Sequenzen aus einem oder mehreren Bits in die Nachricht eingefügt werden.

2. Verfahren nach Anspruch 1,
**dadurch gekennzeichnet, dass** die vom Sender eingefügten Fixed-Stuff-Bit-Sequenzen aus einem oder mehreren Bits empfängerseitig für die Weiterverarbeitung wieder entfernt werden.

3. Verfahren nach einem der Ansprüche 1 oder 2,
**dadurch gekennzeichnet, dass** die zusätzliche Bedingung zählerabhängig vorgegeben ist, so dass in regelmäßigen Abständen Fixed-Stuff-Bit-Sequenzen aus einem oder mehreren Bits in die Nachricht eingefügt werden.

4. Verfahren nach einem der Ansprüche 1 bis 3,
**dadurch gekennzeichnet, dass** das erste eingefügte Bit der Fixed-Stuff-Bit-Sequenz einen zu dem vorhergehenden Bit inversen Wert aufweist.

5. Verfahren nach einem der Ansprüche 1 bis 4,
**dadurch gekennzeichnet, dass** zwischen zwei eingefügten Fixed-Stuff-Bit-Sequenzen jeweils höchstens vier Daten-Bits der zu übertragenden Daten angeordnet sind.

6. Verfahren nach einem der Ansprüche 1 bis 5,
**dadurch gekennzeichnet, dass** zumindest im CRC Field bei Vorliegen der zusätzlichen Bedingung Fixed-Stuff-Bit-Sequenzen in die Nachricht eingefügt werden.

7. Verfahren nach einem der Ansprüche 1 bis 6,
**dadurch gekennzeichnet, dass** in der gesamten Nachricht bei Vorliegen der zusätzlichen Bedingung Fixed-Stuff-Bit-Sequenzen in die Nachricht eingefügt werden.

8. Verfahren nach einem der Ansprüche 1 bis 7,
**dadurch gekennzeichnet, dass** für wenigstens einen Wert der Kennzeichnung das CRC Field der Nachricht eine von der CAN-Norm abweichende Anzahl von Bits aufweist.

9. Verfahren nach einem der Ansprüche 1 bis 8,
**dadurch gekennzeichnet, dass** die Fixed-Stuff-Bit-Sequenz aus einem einzelnen Bit besteht, wobei bei vorangehender "0" als Fixed-Stuff-Bit-Sequenz "1" eingefügt wird und bei vorangehender "1" als Fixed-Stuff-Bit-Sequenz "0" eingefügt wird.

10. Verfahren nach einem der Ansprüche 1 bis 8,
**dadurch gekennzeichnet, dass** die Fixed-Stuff-Bit-Sequenz aus zwei Bits besteht, wobei bei vorangehender "0" als Fixed-Stuff-Bit-Sequenz "1 0" eingefügt wird und bei vorangehender "1" als Fixed-Stuff-Bit-Sequenz "0 1" eingefügt wird.

11. Verfahren nach einem der Ansprüche 1 bis 10,
**dadurch gekennzeichnet, dass** nur im CRC Field bei Vorliegen der zusätzlichen Bedingung Fixed-Stuff-Bit-Sequenzen in die Nachricht eingefügt werden und das CRC Field mit einer Fixed-Stuff-Bit-Sequenz beginnt.

12. Verfahren nach einem der Ansprüche 1 bis 11,
**dadurch gekennzeichnet, dass** bei Vorliegen der ersten Kennzeichnung (EDL) das Control Field der Nachrichten abweichend von der CAN-Norm mehr als sechs Bit umfasst.

13. Verfahren nach einem der Ansprüche 1 bis 12,
**dadurch gekennzeichnet, dass** die erste Kennzeichnung (EDL) für Nachrichten mit Standard Adressierung durch ein rezessives zweites Bit im Control Field und für Nachrichten mit Extended Adressierung durch ein rezessives erstes und / oder zweites Bit im Control Field erfolgt.

14. Verfahren nach Anspruch 13,
**dadurch gekennzeichnet, dass** bei Vorliegen der ersten Kennzeichnung auf das rezessive Bit der ersten Kennzeichnung (EDL) in allen Daten-Nachrichten wenigstens ein dominantes Bit folgt.

15. Verfahren nach einem der Ansprüche 1 bis 14,
**dadurch gekennzeichnet, dass** bei Vorliegen der ersten Kennzeichnung (EDL) das Datenfeld der Nachrichten abweichend von der CAN-Norm ISO 11898-1 mehr als acht Bytes umfassen kann,
wobei zur Feststellung der Größe des Datenfeldes die Werte der vier Bits des Data Length Codes zumindest teilweise abweichend von der CAN-Norm ISO 11898-1 interpretiert werden.

16. Verfahren nach Anspruch 15,
**dadurch gekennzeichnet, dass** die erste Kennzeichnung (EDL) in den Busteilnehmern ausgewertet wird und abhängig von der ersten Kennzeichnung und dem Data Length Code der Empfangsprozess an die Größe des Datenfeldes angepasst wird.

17. Verfahren nach einem der Ansprüche 1 bis 16,
**dadurch gekennzeichnet, dass** bei Vorliegen einer zweiten Kennzeichnung (BRS) die Bitlänge für wenigstens einen vorgegebenen oder vorgebbaren Bereich innerhalb der Nachricht einen gegenüber der vor dem Vorliegen der zweiten Kennzeichnung verwendeten Bitlänge verkürzten Wert annimmt,
wobei der Bereich frühestens mit der zweiten Kennzeichnung beginnt und spätestens mit dem CRC Delimiter endet,
wobei die zweite Kennzeichnung (BRS) nur bei Vorliegen der ersten Kennzeichnung (EDL) auftritt und in dem abweichend von der CAN-Norm ISO 11898-1 mehr als sechs Bit umfassenden Control Field der Nachrichten erfolgt.

18. Verfahren nach Anspruch 17,
**dadurch gekennzeichnet, dass** die zweite Kennzeichnung (BRS) durch ein rezessives Bit im Control Field erfolgt, welches zeitlich nach dem Bit der ersten Kennzeichnung (EDL) übertragen wird.

19. Verfahren nach Anspruch 18,
**dadurch gekennzeichnet, dass** bei Vorliegen der zweiten Kennzeichnung das rezessive Bit der zweiten Kennzeichnung (BRS) vom rezessiven Bit der ersten Kennzeichnung (EDL) durch wenigstens ein dominantes Bit getrennt ist.

20. Verfahren nach einem der Ansprüche 13 bis 19,
**dadurch gekennzeichnet, dass** bei Vorliegen der ersten Kennzeichnung die Flanke zwischen dem rezessiven Bit der ersten Kennzeichnung (EDL) und dem wenigstens einen folgenden dominanten Bit zur Re-Synchronisierung oder Hard-Synchronisierung des Bit-Timings der Busteilnehmer genutzt wird.

21. Verfahren nach einem der Ansprüche 17 bis 20,
**dadurch gekennzeichnet, dass** die zweite Kennzeichnung (BRS) in den Busteilnehmern bei Vorliegen der ersten Kennzeichnung ausgewertet wird und abhängig vom Wert der zweiten Kennzeichnung der Empfangsprozess an die unterschiedlichen Werte der Bitlänge innerhalb einer Nachricht angepasst wird.

22. Verfahren nach einem der Ansprüche 17 bis 21,
**dadurch gekennzeichnet, dass** die mindestens zwei unterschiedlichen Werte der zeitlichen Bitlänge innerhalb einer Nachricht durch Verwendung mindestens zweier unterschiedlicher Skalierungsfaktoren zur Einstellung der Bus-Zeiteinheit relativ zu einer kleinsten Zeiteinheit oder dem Oszillatortakt im laufenden Betrieb realisiert werden.

23. Vorrichtung zur seriellen Datenübertragung in einem Bussystem mit mindestens zwei Busteilnehmern, die über den Bus Nachrichten austauschen, wobei der Sendezugriff auf den Bus für jede Nachricht an einen Busteilnehmer durch das Arbitrierungsverfahren gemäß der CAN-Norm ISO 11898-1 vergeben wird,
wobei die Nachrichten einen logischen Aufbau gemäß der CAN-Norm aufweisen, also aus Start-of-Frame-Bit, Arbitration Field, Control Field, Data Field, CRC Field, Acknowledge Field und End-of-Frame-Field aufgebaut sind,
wobei Mittel vorgesehen sind, mittels derer bei Vorliegen einer Stuff-Bedingung zwischen die zu übertragenden Daten Stuff-Bits nach den Regeln der CAN-Norm in die Nachricht eingefügt werden,
wobei weitere Mittel vorgesehen sind, durch die zu Beginn einer Nachricht zusätzlich zur Berechung des CRC Field gemäß CAN-Norm die Berechnung wenigstens einer weiteren CRC Sequenz mittels eines von der CAN-Norm abweichenden Generator-Polynoms gestartet wird,
wobei bei wenigstens einer der zusätzlich ausgeführten CRC-Berechnungen abweichend von der CAN-Norm auch die Stuff-Bits, die vor Beginn des CRC Field eingefügt wurden, berücksichtigt werden,
wobei abhängig von einer geeigneten Kennzeichnung (EDL) entschieden wird, welches Ergebnis aus einer der parallel gestarteten CRC-Berechnungen zur Prüfung der korrekten Datenübertragung verwendet wird,
**dadurch gekennzeichnet, dass** durch geeignete zusätzliche Mittel für wenigstens einen Wert der Kennzeichnung eine zusätzliche Bedingung überprüft wird, bei deren Vorliegen vom Sender zumindest in Teile der Nachricht Fixed-Stuff-Bit-Sequenzen aus einem oder mehreren Bits in die Nachricht eingefügt werden.

24. Vorrichtung nach Anspruch 23,
**dadurch gekennzeichnet, dass** die Vorrichtung durch geeignete Mittel dafür eingerichtet ist, zumindest eines der Verfahren zur Datenübertragung gemäß Anspruch 2 bis 22 auszuführen.

25. Vorrichtung nach einem der Ansprüche 23 bis 24,
**dadurch gekennzeichnet, dass** die geeigneten Mittel zumindest ein zwischen wenigstens zwei Modi umschaltbares Steuerwerk umfassen.

26. Vorrichtung nach Anspruch 25,
**dadurch gekennzeichnet, dass** das umschaltbare Steuerwerk zumindest einen zählerabhängigen Modus aufweist.

27. Verwendung des Verfahrens nach einem der Ansprüche 1 bis 22 im normalen Betrieb eines Kraftfahrzeuges zur Übertragung von Daten zwischen wenigstens zwei Steuergeräten des Kraftfahrzeuges, welche über einen geeigneten Datenbus verbunden sind.

28. Verwendung des Verfahrens nach einem der Ansprüche 1 bis 22 im Betrieb industrieller Steuerungsanlagen zur Übertragung von Daten zwischen wenigstens zwei Steuereinheiten, welche über einen geeigneten Datenbus verbunden sind.

29. Verwendung des Verfahrens nach einem der Ansprüche 1 bis 22 während der Fertigung oder Wartung eines Kraftfahrzeuges zur Übertragung von Daten zwischen einer zum Zwecke der Programmierung mit einem geeigneten Datenbus verbundenen Programmierungseinheit und wenigstens einem Steuergerät des Kraftfahrzeuges, welches mit dem Datenbus verbunden ist.

## Claims

1. Method for serially transmitting data in a bus system having at least two bus subscribers which interchange messages via the bus, wherein transmission access to the bus for each message is allocated to a bus subscriber by the arbitration method according to the CAN standard ISO 11898-1,
wherein the messages have a logical structure according to the CAN standard, that is to say are constructed from a start-of-frame bit, an arbitration field, a control field, a data field, a CRC field, an acknowledge field and an end-of-frame field, wherein, if a stuffing condition is present, stuffing bits are inserted into the message between the data bits to be transmitted according to the rules of the CAN standard,
wherein, in addition to the calculation of the CRC field according to the CAN standard, the calculation of at least one further CRC sequence is started at the start of a message by means of a generator polynomial which differs from the CAN standard,
wherein, for at least one of the CRC calculations additionally carried out which differs from the CAN standard, the stuffing bits which were inserted before the start of the CRC field are also taken into account, wherein a suitable identification (EDL) is used as a basis for deciding which result from one of the CRC calculations started in a parallel manner is used to check the correct data transmission,
**characterized in that** an additional condition is checked for at least one value of the identification, in which case the transmitter inserts fixed stuffing bit sequences comprising one or more bits into the message, at least into parts of the message, if said condition is present.

2. Method according to Claim 1,
**characterized in that** the fixed stuffing bit sequences comprising one or more bits which are inserted by the transmitter are removed again at the receiver end for further processing.

3. Method according to either of Claims 1 and 2,
**characterized in that** the additional condition is predefined on the basis of a counter, with the result that fixed stuffing bit sequences comprising one or more bits are inserted into the message at regular intervals.

4. Method according to one of Claims 1 to 3,
**characterized in that** the first inserted bit in the fixed stuffing bit sequence has a value which is the inverse of the preceding bit.

5. Method according to one of Claims 1 to 4,
**characterized in that** a maximum of four data bits of the data to be transmitted are respectively arranged between two inserted fixed stuffing bit sequences.

6. Method according to one of Claims 1 to 5,
**characterized in that** fixed stuffing bit sequences are inserted into the message at least in the CRC field if the additional condition is present.

7. Method according to one of Claims 1 to 6,
**characterized in that** fixed stuffing bit sequences are inserted into the message in the entire message if the additional condition is present.

8. Method according to one of Claims 1 to 7,
**characterized in that** the CRC field in the message has a number of bits differing from the CAN standard for at least one value of the identification.

9. Method according to one of Claims 1 to 8,
**characterized in that** the fixed stuffing bit sequence consists of an individual bit, wherein "1" is inserted as the fixed stuffing bit sequence in the case of a preceding "0", and "0" is inserted as the fixed stuffing bit sequence in the case of a preceding "1".

10. Method according to one of Claims 1 to 8,
**characterized in that** the fixed stuffing bit sequence consists of two bits, wherein "1 0" is inserted as the fixed stuffing bit sequence in the case of a preceding "0", and "0 1" is inserted as the fixed stuffing bit sequence in the case of a preceding "1".

11. Method according to one of Claims 1 to 10,
**characterized in that** fixed stuffing bit sequences are inserted into the message only in the CRC field if the additional condition is present, and the CRC field begins with a fixed stuffing bit sequence.

12. Method according to one of Claims 1 to 11,
**characterized in that** the control field in the messages comprises more than six bits in a manner differing from the CAN standard if the first identification (EDL) is present.

13. Method according to one of Claims 1 to 12,
**characterized in that** the first identification (EDL) is effected by means of a recessive second bit in the control field for messages with standard addressing and is effected by means of a recessive first and/or second bit in the control field for messages with extended addressing.

14. Method according to Claim 13,
**characterized in that** the recessive bit of the first identification (EDL) is followed by at least one dominant bit in all data messages if the first identification is present.

15. Method according to one of Claims 1 to 14,
**characterized in that** the data field in the messages may comprise more than eight bytes in a manner differing from the CAN standard ISO 11898-1 if the first identification (EDL) is present,
wherein, in order to determine the size of the data field, the values of the four bits of the data length code are interpreted at least partially in a manner differing from the CAN standard ISO 11898-1.

16. Method according to Claim 15,
**characterized in that** the first identification (EDL) is evaluated in the bus subscribers and the receiving process is adapted to the size of the data field depending on the first identification and the data length code.

17. Method according to one of Claims 1 to 16,
**characterized in that,** if a second identification (BRS) is present, the bit length for at least one predefined or predefinable area inside the message assumes a value which is shortened in comparison with the bit length used before the second identification was present,
wherein the area begins at the earliest with the second identification and ends at the latest with the CRC delimiter,
wherein the second identification (BRS) occurs only when the first identification (EDL) is present and is effected in the control field in the messages which comprises more than six bits in a manner differing from the CAN standard ISO 11898-1.

18. Method according to Claim 17,
**characterized in that** the second identification (BRS) is effected by means of a recessive bit in the control field, which bit is transmitted, in terms of time, after the bit of the first identification (EDL).

19. Method according to Claim 18,
**characterized in that,** if the second identification is present, the recessive bit of the second identification (BRS) is separated from the recessive bit of the first identification (EDL) by means of at least one dominant bit.

20. Method according to one of Claims 13 to 19,
**characterized in that,** if the first identification is present, the edge between the recessive bit of the first identification (EDL) and the at least one following dominant bit is used for the resynchronization or hard synchronization of the bit timing of the bus subscribers.

21. Method according to one of Claims 17 to 20,
**characterized in that** the second identification (BRS) is evaluated in the bus subscribers if the first identification is present, and the receiving process is adapted to the different values of the bit length inside a message depending on the value of the second identification.

22. Method according to one of Claims 17 to 21,
**characterized in that** the at least two different values of the temporal bit length inside a message are implemented by using at least two different scaling factors for setting the bus time unit relative to a smallest time unit or the oscillator clock during ongoing operation.

23. Apparatus for serially transmitting data in a bus system having at least two bus subscribers which interchange messages via the bus, wherein transmission access to the bus for each message is allocated to a bus subscriber by the arbitration method according to the CAN standard ISO 11898-1,
wherein the messages have a logical structure according to the CAN standard, that is to say are constructed from a start-of-frame bit, an arbitration field, a control field, a data field, a CRC field, an acknowledge field and an end-of-frame field,
wherein means are provided and are used to insert stuffing bits into the message between the data to be transmitted according to the rules of the CAN standard if a stuffing condition is present,
wherein further means are provided and are used, in addition to the calculation of the CRC field according to the CAN standard, to start the calculation of at least one further CRC sequence at the start of a message by means of a generator polynomial which differs from the CAN standard,
wherein, for at least one of the CRC calculations additionally carried out which differs from the CAN standard, the stuffing bits which were inserted before the start of the CRC field are also taken into account,
wherein a suitable identification (EDL) is used as a basis for deciding which result from one of the CRC calculations started in a parallel manner is used to check the correct data transmission,
**characterized in that** suitable additional means are used to check an additional condition for at least one value of the identification, in which case the transmitter inserts fixed stuffing bit sequences comprising one or more bits into the message, at least into parts of the message, if said condition is present.

24. Apparatus according to Claim 23,
**characterized in that** the apparatus is set up, by means of suitable means, to carry out at least one of the methods for transmitting data according to Claims 2 to 22.

25. Apparatus according to either of Claims 23 and 24, **characterized in that** the suitable means comprise at least one controller which can be changed over between at least two modes.

26. Apparatus according to Claim 25,
**characterized in that** the controller which can be changed over has at least one counter-dependent mode.

27. Use of the method according to one of Claims 1 to 22 during normal operation of a motor vehicle for the purpose of transmitting data between at least two control devices of the motor vehicle which are connected via a suitable data bus.

28. Use of the method according to one of Claims 1 to 22 during operation of industrial control systems for the purpose of transmitting data between at least two control units which are connected via a suitable data bus.

29. Use of the method according to one of Claims 1 to 22 during the production or maintenance of a motor vehicle for the purpose of transmitting data between a programming unit connected to a suitable data bus for the purpose of programming and at least one control device of the motor vehicle which is connected to the data bus.

## Revendications

1. Procédé de transmission de données en série dans un système de bus comportant au moins un dispositif utilisateur de bus qui échange des messages de bus, dans lequel l'accès en émission au bus est conféré pour chaque message à un utilisateur de bus par le procédé d'arbitrage répondant à la norme CAN ISO 11898-1,
dans lequel les messages présentent une structure logique conforme à la norme CAN et sont par conséquent constitués d'un bit de début de trame, d'un champ d'arbitrage, d'un champ de commande, d'un champ de données, d'un champ CRC, d'un champ d'accusé de réception et d'un champ de fin de trame,
dans lequel, en présence d'une condition de remplissage entre les bits de données à transmettre, des bits de remplissage sont introduits dans le message conformément aux règles de la norme CAN,
dans lequel, le calcul d'au moins une autre séquence CRC au moyen d'un polynôme générateur s'écartant de la norme CAN est déclenché au début d'un message en plus du calcul du champ CRC conformément à la norme CAN, dans lequel, lors d'au moins l'un des calculs de CRC effectués de manière supplémentaire, les bits de remplissage qui ont été introduits avant le début du champ CRC sont également pris en compte d'une façon qui s'écarte de la norme CAN,
dans lequel il est décidé, en fonction d'une identification appropriée (EDL), lequel des résultats de l'un des calculs de CRC déclenchés en parallèle est utilisé pour vérifier la bonne transmission des données,
**caractérisé en ce que**, pour au moins une valeur de l'identification, une condition supplémentaire est vérifiée, lors de la présence de laquelle dans au moins certaines parties du message, des séquences de bits de remplissage fixes constituées d'un ou plusieurs bits sont introduites dans le message par l'émetteur.

2. Procédé selon la revendication 1,
**caractérisé en ce que** des séquences de bits de remplissage fixes constituées d'un ou plusieurs bits introduites par l'émetteur sont éliminées côté récepteur pour le post-traitement.

3. Procédé selon l'une quelconque des revendications 1 ou 2,
**caractérisé en ce que** la condition supplémentaire est prédéfinie en fonction d'un compteur de manière à ce que des séquences de bits de remplissage fixes constituées d'un ou plusieurs bits soient introduites dans le message à des intervalles réguliers.

4. Procédé selon l'une quelconque des revendications 1 à 3,
**caractérisé en ce que** le premier bit introduit de la séquence de bits de remplissage fixe présente une valeur inverse du bit précédent.

5. Procédé selon l'une quelconque des revendications 1 à 4,
**caractérisé en ce qu'**au plus quatre bits de données des données à transmettre sont respectivement disposés entre deux séquences de bits de remplissage fixes introduites.

6. Procédé selon l'une quelconque des revendications 1 à 5, **caractérisé en ce qu'**en présence de la condition supplémentaire au moins dans le champ CRC, des séquences de bits de remplissage fixes sont introduites dans le message.

7. Procédé selon l'une quelconque des revendications 1 à 6,
**caractérisé en ce qu'**en présence de la condition supplémentaire dans la totalité du message, des séquences de bits de remplissage fixes sont introduites dans le message.

8. Procédé selon l'une quelconque des revendications 1 à 7,
**caractérisé en ce que**, pour au moins une valeur de l'identification, le champ CRC du message présente un nombre de bits s'écartant de la norme CAN.

9. Procédé selon l'une quelconque des revendications 1 à 8,
**caractérisé en ce que** la séquence de bits de remplissage fixe est constituée d'un bit unique, dans lequel, en présence de "0" en tant que séquence de bits de remplissage fixe, "1" est introduit et, en présence de "1" en tant que séquence de bits de remplissage fixe, "0" est introduit.

10. Procédé selon l'une quelconque des revendications 1 à 8,
**caractérisé en ce que** la séquence de bits de remplissage fixe est constituée de deux bits, dans lequel, en présence de "0" en tant que séquence de bits de remplissage fixe, "1 0" est introduit, et en présence de "1" en tant que séquence de bits de remplissage fixe, "0 1" est introduit.

11. Procédé selon l'une quelconque des revendications 1 à 10,
**caractérisé en ce que** des séquences de bits de remplissage fixes ne sont introduites dans le champ CRC du message qu'en présence de la condition supplémentaire et **en ce que** le champ CRC commence par une séquence de bits de remplissage fixe.

12. Procédé selon l'une quelconque des revendications 1 à 11,
**caractérisé en ce qu'**en présence du premier identifiant (EDL), le champ de commande des messages comprend plus de six bits d'une façon qui s'écarte de la norme CAN.

13. Procédé selon l'une quelconque des revendications 1 à 12,
**caractérisé en ce que** la première identification (EDL) s'effectue par l'intermédiaire d'un second bit récessif dans le champ de commande pour des messages ayant un adressage standard et par l'intermédiaire d'un premier et/ou d'un second bit récessif dans le champ de commande pour des messages ayant un adressage étendu.

14. Procédé selon la revendication 13,
**caractérisé en ce qu'**en présence de la première identification au moins un bit dominant suit le bit récessif de la première identification (EDL) dans tous les messages de données.

15. Procédé selon l'une quelconque des revendications 1 à 14,
**caractérisé en ce qu'**en présence de la première identification (EDL), le champ de données des messages peut comprendre plus de huit octets d'une façon qui s'écarte de la norme CAN ISO 11898-1,
dans lequel, pour établir la taille du champ de données, les valeurs des quatre bits du code de longueur de données sont au moins partiellement interprétées d'une façon qui s'écarte de la norme CAN ISO 11898-1.

16. Procédé selon la revendication 15,
**caractérisé en ce que** la première identification (EDL) est évaluée dans les dispositifs utilisateurs de bus et est adaptée à la taille du champ de données en fonction de la première identification et du code de longueur de données du processus de réception.

17. Procédé selon l'une quelconque des revendications 1 à 16,
**caractérisé en ce qu'**en présence d'une seconde identification (BRS), la longueur binaire adopte une valeur plus courte pour au moins une région prédéterminée ou pouvant être prédéterminée à l'intérieur du message par rapport à la longueur binaire utilisée avant la présence de la seconde identification, dans lequel la région commence au plus tôt par la seconde identification et se termine au plus tard par le délimiteur CRC,
dans lequel la seconde identification (BRS) n'apparaît que lors de la présence de la première identification (EDL) et la suit dans le champ de commande des messages qui comprend plus de six bits d'une façon qui s'écarte de la norme CAN ISO 11898-1.

18. Procédé selon la revendication 17,
**caractérisé en ce que** la seconde identification (BRS) s'effectue par l'intermédiaire d'un bit récessif dans le champ de commande, qui est transmis temporellement après le bit de la première identification (EDL).

19. Procédé selon la revendication 18,
**caractérisé en ce qu'**en présence de la seconde identification, le bit récessif de la seconde identification (BRS) est séparé du bit récessif de la première identification (EDL) par au moins un bit dominant.

20. Procédé selon l'une quelconque des revendications 13 à 19,
**caractérisé en ce qu'**en présence de la première identification, le front situé entre le bit récessif de la première identification (EDL) et l'au moins un bit dominant suivant est utilisé à des fins de resynchronisation ou de synchronisation matérielle du cadencement de bit des dispositifs utilisateurs de bus.

21. Procédé selon l'une quelconque des revendications 17 à 20,
**caractérisé en ce que** la seconde identification (BRS) est évaluée dans les dispositifs utilisateurs de bus en présence de la première identification et est adaptée aux différentes valeurs de la longueur binaire à l'intérieur d'un message en fonction de la valeur de la seconde identification du processus de réception.

22. Procédé selon l'une quelconque des revendications 17 à 21,
**caractérisé en ce que** les au moins deux valeurs différentes des longueurs binaires temporelles sont réalisées à l'intérieur d'un message par utilisation d'au moins deux facteurs d'échelle différents destinés à régler l'unité de temps du bus par rapport à une unité de temps la plus petite ou à l'horloge de l'oscillateur pendant le fonctionnement.

23. Dispositif de transmission de données en série dans un système de bus comportant au moins deux dispositifs utilisateurs de bus qui échangent des messages par l'intermédiaire du bus,
dans lequel l'accès en émission au bus est accordé pour chaque message à un dispositif utilisateur de par le procédé d'arbitrage répondant à la norme CAN ISO 11898-1,
dans lequel les messages présentent une structure logique conforme à la norme CAN et sont par conséquent constitués d'un bit de début de trame, d'un champ d'arbitrage, d'un champ de commande, d'un champ de données, d'un champ CRC, d'un champ d'accusé de réception et d'un champ de fin de trame,
dans lequel, il est prévu des moyens à l'aide desquels,
en présence d'une condition de remplissage entre les données à transmettre, des bits de remplissage sont introduits dans le message conformément aux règles de la norme CAN,
dans lequel il est prévu d'autres moyens à l'aide desquels le calcul d'au moins une autre séquence CRC au moyen d'un polynôme générateur s'écartant de la norme CAN est déclenché au début d'un message en plus du calcul du champ CRC conformément à la norme CAN,
dans lequel, lors d'au moins l'un des calculs de CRC effectués de manière supplémentaire, les bits de remplissage qui ont été introduits avant le début du champ CRC sont également pris en compte d'une façon qui s'écarte de la norme CAN,
dans lequel il est décidé en fonction d'une identification appropriée (EDL), lequel des résultats de l'un des calculs de CRC déclenchés en parallèle est utilisé pour vérifier la bonne transmission des données,
**caractérisé en ce que**, pour au moins une valeur de l'identification, une condition supplémentaire est vérifiée à l'aide de moyens supplémentaires appropriés, lors de la présence de laquelle dans au moins certaines parties du message, des séquences de bits de remplissage fixes constituées d'un ou plusieurs bits sont introduites dans le message par l'émetteur.

24. Dispositif selon la revendication 23, **caractérisé en ce que** le dispositif est conçu pour mettre en oeuvre, à l'aide de moyens appropriés, au moins l'un des procédés de transmission de données selon les revendications 2 à 22.

25. Dispositif selon l'une quelconque des revendications 23 à 24,
**caractérisé en ce que** les moyens appropriés comprennent au moins une unité de commande pouvant être amenée à commuter entre au moins deux modes.

26. Dispositif selon la revendication 25, **caractérisé en ce que** l'unité de commande pouvant être commutée comporte au moins un mode dépendant d'un compteur.

27. Utilisation du procédé selon l'une quelconque des revendications 1 à 22 lors du fonctionnement normal d'un véhicule à moteur pour transmettre des données entre au moins deux appareils de commande du véhicule à moteur, lesquels appareils de commande sont connectés par l'intermédiaire d'un bus de données approprié.

28. Utilisation du procédé selon l'une quelconque des revendications 1 à 22 lors du fonctionnement d'installations de commande industrielles pour transmettre des données entre au moins deux unités de commande qui sont connectées par l'intermédiaire d'un bus de données approprié.

29. Utilisation du procédé selon l'une quelconque des revendications 1 à 22 pendant la fabrication ou la maintenance d'un véhicule à moteur pour transmettre des données entre une unité de programmation connectée à des fins de programmation à un bus de données approprié et au moins un appareil de commande du véhicule à moteur, qui est connecté au bus de données.
